# EUROPÄISCHE PATENTSCHRIFT

(11) **EP 3 337 689 B1**
(45) Veröffentlichungstag und Bekanntmachung des Hinweises auf die Patenterteilung: **13.10.2021**
(21) Anmeldenummer: 16757591.9
(22) Anmeldetag: 16.08.2016
(51) Int. Cl.: B60N 2/42, B60N 2/28

(54) **KINDERSITZSCHUTZVORRICHTUNG**
CHILD CAR SEAT PROTECTION DEVICE
SYSTÈME DE PROTECTION DE SIÈGE DE SÉCURITÉ POUR ENFANT

(30) Priorität: 20.08.2015 DE 102015113836
(43) Veröffentlichungstag der Anmeldung: 27.06.2018
(73) Patentinhaber: RECARO Child Safety GmbH & Co. KG, 95352 Marktleugast (DE)
(72) Erfinder: GEBHARDT, Stefan, 95466 Weidenberg (DE); RUFF, Thomas, 95326 Kulmbach (DE)
(74) Vertreter: Perani & Partners S.p.A.
(86) Internationale Anmeldenummer: PCT/EP2016/069383
(87) Internationale Veröffentlichungsnummer: WO 2017/029272

(56) Entgegenhaltungen:
- EP-A1- 2 570 299
- EP-A1- 2 746 097
- EP-A1- 2 907 692
- WO-A1-2011/054063
- DE-U1-202012 102 471
- FR-A1- 2 986 195
- US-A1- 2004 164 529
- US-A1- 2012 306 243

## Beschreibung

### Stand der Technik

Die Erfindung betrifft erfindungsgemäße Kindersitzschutzvorrichtungen.

Es ist bereits eine Kindersitzschutzvorrichtung mit zumindest einer Sitzschale und wenigstens einem Seitenaufprallmodul, das an einer Seite der Sitzschale angeordnet ist, vorgeschlagen worden.

EP-A-2907692 beschreibt eine Kinderschutzvorrichtung mit einer Sitzschale und einem Seitenaufprallmodul, das an einer Seite der Sitzschale angeordnet ist.

Die Aufgabe der Erfindung besteht insbesondere darin, eine gattungsgemäße Vorrichtung mit verbesserten Eigenschaften hinsichtlich einer Sicherheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Erfindungsgemäß wird eine Kindersitzschutzvorrichtung mit zumindest einer Sitzschale und wenigstens einem Seitenaufprallmodul, das an einer Seite der Sitzschale angeordnet ist und zumindest dazu vorgesehen ist, seitlich auf die Sitzschale einwirkende Aufprallenergie aufzunehmen, vorgeschlagen. Unter einer "Sitzschale" soll dabei insbesondere eine Schale verstanden werden, die Teil eines Kindersitzes ist und den Kindersitz zumindest seitlich und nach hinten hin nach außen hin begrenzt. Die Sitzschale bildet dabei vorzugsweise zumindest teilweise eine tragende Struktur des Kindersitzes aus. Unter einem "Seitenaufprallmodul" soll dabei insbesondere ein Modul verstanden werden, das zur Sicherheit eines in der Kindersitzvorrichtung sitzenden oder liegenden Kinds vorgesehen ist, um insbesondere bei einem Unfall eine Energie, insbesondere eine kinetische Aufprallenergie, zumindest teilweise aufzunehmen und dadurch das in dem Kindersitz sitzende Kind zu schützen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "seitlich einwirkend" soll dabei insbesondere im Bezug auf eine Sitzrichtung seitlich einwirkend verstanden werden. Unter einer "Aufprallenergie" soll dabei insbesondere eine kinetische Energie verstanden werden, die insbesondere bei einem Unfall auf die Sitzschale der Kindersitzvorrichtung einwirkt. Unter "Aufprallenergie aufnehmen" soll dabei insbesondere verstanden werden, dass Aufprallenergie von dem Seitenaufprallmodul zumindest teilweise absorbiert wird. Grundsätzlich ist es auch denkbar, dass ein Teil der einwirkenden Aufprallenergie von dem Seitenaufprallmodul umgelenkt wird. Durch eine erfindungsgemäße Ausgestaltung kann bei einem Unfall eine Aufprallenergie, die seitlich auf die Sitzschale eines Kindersitzes wirkt, zumindest teilweise aufgenommen werden und dadurch die effektiv auf ein in dem Kindersitz sitzendes Kind einwirkende Aufprallenergie vorteilhaft verringert werden. Dadurch kann vorteilhaft ein Kindersitz mit einer Kindersitzschutzvorrichtung bereitgestellt werden, die ein in dem Kindersitz sitzendes Kind, insbesondere bei einem Seitenaufprall des Kraftfahrzeugs, bei dem das Kraftfahrzeug an sich einen geringeren Schutz bietet, besonders vorteilhaft vor einer einwirkenden Aufprallenergie schützt.

Weiter wird vorgeschlagen, dass das Seitenaufprallmodul wenigstens ein Absorptionselement aufweist, das wenigstens dazu vorgesehen ist, Aufprallenergie umzuwandeln. Unter einem "Absorptionselement" soll dabei insbesondere ein Element verstanden werden, das eine auf das Element einwirkende Energie, wie insbesondere eine Aufprallenergie, zumindest teilweise in eine andere Energieform umwandelt, wie beispielsweise Umformenergie, Wärmeenergie, Kompressionsenergie oder eine andere, dem Fachmann als sinnvoll erscheinende Energieform, um dadurch die Aufprallenergie zu dämpfen und zu minimieren. Unter "wenigstens einem Absorptionselement" soll dabei insbesondere verstanden werden, dass das Seitenaufprallmodul zumindest ein Absorptionselement aufweist, aber es ist auch denkbar, dass das Seitenaufprallmodul zwei, drei oder eine andere Anzahl von Absorptionselementen aufweist. Unter "Aufprallenergie umwandeln" soll dabei verstanden werden, dass eine kinetische Aufprallenergie zumindest teilweise in eine andere Energieform umgewandelt wird, wie beispielsweise in eine Verformungsenergie, eine Wärmeenergie, eine potentielle Energie und/oder eine Kompressionsenergie. Grundsätzlich ist es auch denkbar, dass die kinetische Aufprallenergie zumindest teilweise in andere, dem Fachmann als sinnvoll erscheinende Energieformen umgewandelt wird. Dadurch kann das Seitenaufprallmodul besonders vorteilhaft zur Aufnahme der Aufprallenergie ausgebildet werden.

Ferner wird vorgeschlagen, dass das Absorptionselement dazu vorgesehen ist, die Aufprallenergie durch plastische Verformung umzuwandeln. Unter einer "plastischen Verformung" soll dabei insbesondere eine dauerhafte, irreversible Verformung eines Elements, insbesondere des Absorptionselements, verstanden werden, die bei Erreichen oder Überschreiten einer Fließgrenze des Materials des Werkstoffs des Elements durch äußere Krafteinwirkung eintritt. Dadurch kann das Absorptionselement besonders einfach für eine Aufnahme der Aufprallenergie ausgebildet werden.

Es wird weiterhin vorgeschlagen, dass das Absorptionselement als ein verformbares Blech ausgebildet ist. Unter einem "verformbaren Blech" soll dabei insbesondere ein Blech verstanden werden, das aus einem Material gebildet ist, das eine Duktilität aufweist, die eine plastische Verformung des Blechs zulässt, wodurch das verformbare Blech durch plastische Verformung Energie, insbesondere die kinetische Aufprallenergie, aufnehmen kann. Dadurch kann das Absorptionselement besonders einfach ausgebildet werden.

Des Weiteren wird vorgeschlagen, dass das Absorptionselement einen im Wesentlichen U-förmigen Querschnitt aufweist. Unter einem "im Wesentlichen U-förmigen Querschnitt" soll dabei insbesondere ein Querschnitt verstanden werden, der eine erste Mittelwandung und zwei an den Seiten der Mittelwandung im Wesentlichen orthogonal zur Mittelwandung ausgerichtete Seitenwandungen aufweist, wobei die Seitenwandungen in ihrer Ausrichtung dabei um 50 Grad, vorzugsweise um weniger als 15 Grad von der Orthogonalen zu der Mittelwandung abweichen können. Dadurch kann das als verformbares Blech ausgebildete Absorptionselement besonders vorteilhaft ausgebildet werden.

Weiterhin wird vorgeschlagen, dass das Absorptionselement eine vordefinierte Biegekante aufweist, an der das Absorptionselement in einem Normalbetriebszustand um wenigstens zwei Grad gebogen ist. Unter einer "vordefinierten Biegekante" soll dabei insbesondere eine Biegekante verstanden werden, die insbesondere quer zu einer Haupterstreckungsrichtung des Absorptionselements verläuft. Dadurch kann eine Verformung des Absorptionselements bei dem Einwirken einer Aufprallenergie während eines Unfalls besonders vorteilhaft gelenkt werden.

Außerdem wird vorgeschlagen, dass das Absorptionselement zwei Seitenwandungen aufweist, wobei in die Seitenwandungen in dem Bereich der vordefinierten Biegekante jeweils eine Nut eingebracht ist. Dadurch kann eine Verformung des Absorptionselements bei dem Einwirken einer Aufprallenergie während eines Unfalls weiter vorteilhaft beeinflusst werden.

Es wird weiter vorgeschlagen, dass das Absorptionselement als ein Federelement ausgebildet ist. Unter einem "Federelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Das Federelement kann vorzugsweise zumindest teilweise aus zumindest einem Elastomer und/oder aus zumindest einem Federstahl gebildet sein. Grundsätzlich ist es ebenfalls denkbar, dass das Federelement als eine Fluidfeder ausgebildet ist. Dadurch kann das Absorptionselement besonders vorteilhaft ausgebildet werden.

Zudem wird vorgeschlagen, dass das als Federelement ausgebildete Absorptionselement als eine Fluidfeder ausgebildet ist. Unter einer "Fluidfeder" soll dabei insbesondere ein Federelement verstanden werden, das eine Federkraft durch Kompression eines Fluids bereitstellt. Eine Fluidfeder ist dabei beispielsweise als eine Gasdruckfeder ausgebildet. Dadurch kann das Absorptionselement besonders vorteilhaft ausgebildet werden.

Weiter wird vorgeschlagen, dass das als Federelement ausgebildete Absorptionselement als eine mechanische Feder ausgebildet ist. Unter einer "mechanischen Feder" soll dabei insbesondere ein Federelement aus einem Material verstanden werden, das durch elastische Verformung eine Federkraft bereitstellt. Dabei ist eine mechanische Feder beispielsweise als eine Spiralfeder, als eine Blattfeder, eine Tellerfeder oder eine andere, dem Fachmann als sinnvoll erscheinende mechanische Feder ausgebildet. Dadurch kann das als Federelement ausgebildete Absorptionselement besonders einfach und kostengünstig ausgebildet werden.

Ferner wird vorgeschlagen, dass das Absorptionselement als ein verformbares Rohr ausgebildet ist. Unter einem "verformbaren Rohr" soll dabei insbesondere ein rohrförmiges Element verstanden werden, das aus einem Material gebildet ist, welches eine Duktilität aufweist, die eine plastische Verformung des rohrförmigen Elements zulässt, wodurch das rohrförmige Element durch plastische Verformung Energie, insbesondere die kinetische Aufprallenergie, aufnehmen kann. Dadurch kann das Absorptionselement besonders einfach ausgebildet werden.

Es wird weiterhin vorgeschlagen, dass das Absorptionselement als eine Kniehebelmechanik ausgebildet ist. Unter einer "Kniehebelmechanik" soll dabei insbesondere eine Mechanik verstanden werden, die wenigstens einen Kniehebel aus zwei schwenkbar miteinander verbundenen Hebeln aufweist, wobei eine Verbindung zwischen den beiden Hebeln vorzugsweise reibbehaftet ist, wodurch beim Verschwenken der beiden Hebel eines Kniehebels kinetische Energie in Wärmeenergie umgewandelt wird. Dadurch kann das Absorptionselement besonders vorteilhaft ausgebildet werden.

Des Weiteren wird vorgeschlagen, dass das Absorptionselement als eine Wabenstruktur ausgebildet ist. Unter einer "Wabenstruktur" soll dabei insbesondere eine Struktur aus wenigstens einer Lage von nebeneinander angeordneten Waben verstanden werden, wobei die Waben vorzugsweise eine sechseckige Grundform aufweisen. Dabei ist die Struktur in ihrer Erstreckungsrichtung der Waben auf Druck belastbar, wobei die Waben ab einer gewissen Kraft oder Aufprallenergie kollabieren, sich dabei verformen und eine Energie aufnehmen. Dabei ist es denkbar, dass in den Hohlräumen der Waben ein Füllmaterial, wie beispielsweise ein Schaum, angeordnet ist. Dadurch kann das Absorptionselement besonders vorteilhaft ausgebildet werden.

Weiterhin wird vorgeschlagen, dass das Absorptionselement als ein Schaumelement ausgebildet ist. Unter einem "Schaumelement" soll dabei insbesondere ein Element verstanden werden, das zumindest teilweise, vorzugsweise hauptsächlich aus einem Schaum gebildet ist, der sich bei Einwirken von einer Aufprallenergie plastisch und/oder elastisch verformt, um dadurch die Aufprallenergie zumindest teilweise aufzunehmen. Dadurch kann das Absorptionselement besonders vorteilhaft und einfach ausgebildet werden.

Außerdem wird vorgeschlagen, dass das Absorptionselement zumindest eine aufzubiegende Nut aufweist. Unter einer "aufzubiegenden Nut" soll dabei insbesondere eine Nut verstanden werden, die in ein Bauteil, wie beispielsweise ein Blech, eingebracht wird, in dem ein Element, beispielsweise ein Stiftelement, geführt ist, das eine Breite aufweist, die größer ist als eine Breite der aufzubiegenden Nut, wobei das Element bei einem Unfall durch die Aufprallenergie relativ zu der Nut bewegt wird und diese dabei aufbiegt, dabei plastisch verformt und so die Aufprallenergie zumindest teilweise in Verformungsenergie umwandelt. Dadurch kann das Absorptionselement besonders einfach und vorteilhaft ausgebildet werden.

Es wird weiter vorgeschlagen, dass das Absorptionselement durch Verdrängung eines Fluids dazu vorgesehen ist, eine Aufprallenergie abzubauen. Unter einer "Verdrängung eines Fluids" soll dabei insbesondere verstanden werden, dass ein Fluid, beispielsweise ein Gas, insbesondere durch die Aufprallenergie verdrängt wird und dabei durch Leitung durch einen engen Querschnitt und/oder durch Kompression die Aufprallenergie zumindest teilweise umwandelt. Dadurch kann das Absorptionselement besonders vorteilhaft ausgebildet werden.

Zudem wird vorgeschlagen, dass das Seitenaufprallmodul wenigstens ein Seitenaufprallelement aufweist, das zwischen einer Ruhestellung und einer Funktionsstellung verstellbar ist, wobei das Absorptionselement zumindest in der Funktionsstellung funktional zwischen dem Seitenaufprallelement und der Sitzschale angeordnet ist. Unter einem "Seitenaufprallelement" soll dabei insbesondere ein Element verstanden werden, das eine Aufprallenergie aufnimmt und insbesondere an das Absorptionselement weiterleitet. Das Seitenaufprallelement ist dazu vorgesehen, eine Fläche bereitzustellen, auf der die Aufprallenergie auf das Seitenaufprallmodul einwirken kann. Dabei deckt das Seitenaufprallelement insbesondere vorteilhaft einen Bereich ab, in dem das Seitenaufprallmodul Aufprallenergie aufnehmen soll. Unter einer "Ruhestellung" soll dabei insbesondere eine Stellung des Seitenaufprallelements verstanden werden, in der es möglichst platzsparend an einer Seite der Sitzschale angeordnet ist und insbesondere nicht dazu geeignet ist, Aufprallenergie an das Absorptionselement weiterzuleiten. Unter einer "Funktionsstellung" soll dabei insbesondere eine Stellung des Seitenaufprallelements verstanden werden, in der es in einem Gebrauchszustand angeordnet ist und in dem es entsprechend seiner Bestimmung eine auftretende Aufprallenergie zumindest teilweise in das Absorptionselement einleitet. Unter "verstellbar" soll insbesondere verstanden werden, dass das Seitenaufprallelement von einer Person, insbesondere händisch und vorzugsweise ohne die Verwendung von zusätzlichen Werkzeugen, zwischen der Ruhestellung und der Funktionsstellung hin- und herbewegt werden kann, wobei eine Bewegung des Seitenaufprallelements dabei einer Schwenkbewegung, einer translatorischen Bewegung, einer Rotationsbewegung oder einer anderen, dem Fachmann als sinnvoll erscheinenden Bewegung gleichen kann. Dabei ist das Seitenaufprallelement sowohl in der Ruhestellung als auch in der Funktionsstellung verliersicher an der Sitzschale angeordnet. Das Seitenaufprallelement ist vorzugsweise sowohl in der Ruhestelllung als auch in der Funktionsstellung zumindest teilweise arretierbar. Dadurch kann das Seitenaufprallmodul besonders vorteilhaft ausgebildet werden und die Aufprallenergie bei einem Unfall besonders vorteilhaft in das Absorptionselement eingeleitet werden.

Weiter wird vorgeschlagen, dass das Seitenaufprallelement als ein verschwenkbarer Flügel ausgebildet ist, der mit einem Ende schwenkbar gelagert ist. Unter einem "Ende des Seitenaufprallelements" soll dabei insbesondere wahlweise ein, in Sitzrichtung gesehen, vorderes Ende des Seitenaufprallelements oder ein, in Sitzrichtung gesehen, hinteres Ende des Seitenaufprallelements verstanden werden. Dadurch kann das Seitenaufprallelement besonders einfach zwischen der Ruhestellung und der Funktionsstellung verstellt werden.

Ferner wird vorgeschlagen, dass das Seitenaufprallmodul in einem Kopfbereich der Sitzschale angeordnet ist. Unter einem "Kopfbereich" soll dabei insbesondere ein Bereich der Sitzschale verstanden werden in dem, in einem Betriebszustand, in dem ein Baby oder ein Kind in vorgesehener Weise in dem Kindersitz liegend oder sitzend angeordnet ist, ein Kopf des Kindes oder des Babys angeordnet ist. Dadurch kann das Seitenaufprallmodul besonders vorteilhaft zum Schutz des Kindes oder Babys an der Sitzschale positioniert werden.

Es wird weiterhin ein Kindersitz mit einer Kindersitzschutzvorrichtung vorgeschlagen, wobei der Kindersitz wenigstens zwei Seitenaufprallmodule aufweist, die jeweils an gegenüberliegenden Seiten der Sitzschale angeordnet sind. Dadurch kann ein besonders vorteilhafter Kindersitz bereitgestellt werden, der auf beiden Seiten gegen einen Seitenaufprall gesichert ist.

Die erfindungsgemäße Kindersitzschutzvorrichtung soll hierbei nicht auf die oben beschriebene Anwendung und Ausführungsform beschränkt sein. Insbesondere kann die erfindungsgemäße Kindersitzschutzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind neun Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Kindersitzes mit einer Kindersitzschutzvorrichtung in einem ersten Ausführungsbeispiel,
- Fig. 2: eine schematische Darstellung eines Seitenaufprallmoduls der Kindersitzschutzvorrichtung,
- Fig. 3: eine schematische Darstellung eines Absorptionselements des Seitenaufprallmoduls der Kindersitzschutzvorrichtung,
- Fig. 4: eine weitere vereinfachte schematische Darstellung des Seitenaufprallmoduls der Kindersitzschutzvorrichtung,
- Fig. 5: eine vereinfachte schematische Darstellung eines Seitenaufprallmoduls einer Kindersitzschutzvorrichtung in einem zweiten Ausführungsbeispiel,
- Fig. 6: eine vereinfachte schematische Darstellung eines Seitenaufprallmoduls einer Kindersitzschutzvorrichtung in einem dritten Ausführungsbeispiel,
- Fig. 7: eine vereinfachte schematische Darstellung eines Seitenaufprallmoduls einer Kindersitzschutzvorrichtung in einem vierten Ausführungsbeispiel,
- Fig. 8: eine vereinfachte schematische Darstellung eines Seitenaufprallmoduls einer Kindersitzschutzvorrichtung in einem fünften Ausführungsbeispiel,
- Fig. 9: eine vereinfachte schematische Darstellung eines Seitenaufprallmoduls einer Kindersitzschutzvorrichtung in einem sechsten Ausführungsbeispiel,
- Fig. 10: eine vereinfachte schematische Darstellung eines Seitenaufprallmoduls einer Kindersitzschutzvorrichtung in einem siebten Ausführungsbeispiel,
- Fig. 11: eine vereinfachte schematische Darstellung eines Seitenaufprallmoduls einer Kindersitzschutzvorrichtung in einem achten Ausführungsbeispiel und
- Fig. 12: eine vereinfachte schematische Darstellung eines Seitenaufprallmoduls einer Kindersitzschutzvorrichtung in einem neunten Ausführungsbeispiel.

### Beschreibung der Ausführungsbeispiele

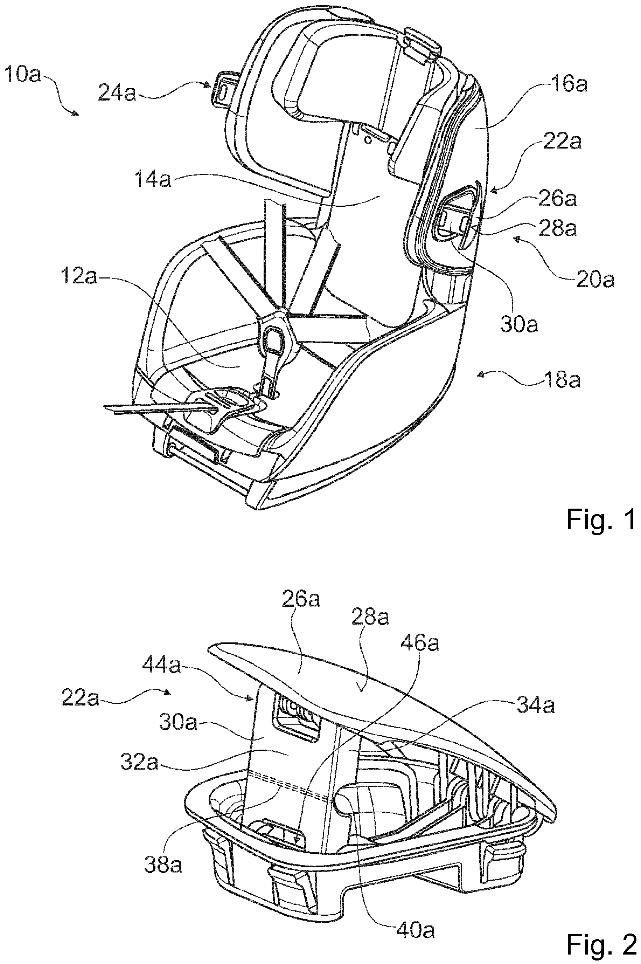

Die Figuren 1 bis 4 zeigen ein erstes Ausführungsbeispiel einer erfindungsgemäßen Kindersitzschutzvorrichtung. Die Kinderschutzvorrichtung ist Teil eines Kindersitzes 10a. Der Kindersitz 10a ist als ein Kraftfahrzeugkindersitz ausgebildet. Der als Kraftfahrzeugkindersitz ausgebildete Kindersitz 10a ist dazu vorgesehen, dass er zum Transport eines Babys oder eines Kindes in einem Kraftfahrzeug befestigt wird. Der Kindersitz 10a weist eine Sitzrichtung aus, die im Wesentlichen orthogonal zu einer Rückenlehne 14a des Kindersitzes 10a ausgerichtet ist und die eine Richtung darstellt, in der ein in dem Kindersitz 10a sitzendes oder liegendes Kind oder Baby mit seinem Kopf ausgerichtet ist. Der Kindersitz 10a weist eine nicht näher bezeichnete Sitzbasis auf, über die der Kindersitz 10a fest mit einem Kraftfahrzeugsitz und/oder einer Sitzbank des Kraftfahrzeugs verbindbar ist. Dabei ist der Kindersitz 10a auf eine dem Fachmann als sinnvoll erscheinende und aus dem Stand der Technik bekannte Weise, beispielsweise über einen ISO-Fix-Konnektor, mit dem Kraftfahrzeugsitz oder der Sitzbank gekoppelt. Dabei ist der Kindersitz 10a mit seiner Sitzrichtung in Fahrtrichtung des Kraftfahrzeugs mit dem Kraftfahrzeugsitz oder der Sitzbank gekoppelt. Grundsätzlich ist es auch denkbar, dass der Kindersitz 10a mit seiner Sitzrichtung entgegen der Fahrtrichtung des Kraftfahrzeugs mit dem Kraftfahrzeugsitz oder der Sitzbank gekoppelt ist. Der Kindersitz 10a bildet einen Sitzboden 12a und die Rückenlehne 14a aus. Der Sitzboden 12a bildet dabei eine Sitzfläche aus, auf die ein in dem Kindersitz 10a angeordnetes Kind gesetzt werden kann. Die Rückenlehne 14a ist an einer Rückseite des Sitzbodens 12a angeordnet und erstreckt sich von dem Sitzboden 12a aus nach oben von der Sitzbasis weg. Die Rückenlehne 14a bildet dabei eine Rückenlehnenfläche für das in dem Kindersitz 10a sitzende Kind aus. Der Kindersitz 10a umfasst eine Sitzschale 16a, die den Kindersitz 10a zumindest im Bereich des Sitzbodens 12a und der Rückenlehne 14a seitlich und nach hinten begrenzt. Die Sitzschale 16a bildet einen unteren Bodenbereich 18a und einen über dem Bodenbereich 18a angeordneten Kopfbereich 20a. Der Kopfbereich 20a umschließt dabei seitlich zumindest einen Bereich, in dem zumindest eine Kopf- und Schulterpartie eines in dem Kindersitz 10a sitzenden Kindes oder Babys angeordnet ist. Dabei ragt die Sitzschale 16a in dem Kopfbereich 20a von der Rückenlehne 14a aus auf beiden Seiten des Kindersitzes 10a in einen Sitzbereich des Kindersitzes 10a hinein. Dadurch schützt die Sitzschale 16a in dem Kopfbereich 20a das in dem Kindersitz 10a sitzende Kind oder Baby seitlich. Die Sitzschale 16a ist aus einem Hartplastik gebildet. Grundsätzlich ist es auch denkbar, dass die Sitzschale 16a aus einem anderen, dem Fachmann als sinnvoll erscheinenden Material gebildet ist. Im Inneren der Sitzschale 16a weist der Kindersitz 10a weiter zumindest eine nicht näher bezeichnete Polsterung, eine Kopfstütze und ein internes Gurtsystem auf, die im Folgenden nicht näher beschrieben werden sollen. Der Kindersitz 10a weist auch weitere Elemente auf, die allerdings aus Gründen der Übersichtlichkeit und aus fehlender Relevanz zur erfindungsgemäßen Kindersitzschutzvorrichtung im Folgenden nicht näher beschrieben werden sollen.

Die Kindersitzschutzvorrichtung umfasst ein erstes Seitenaufprallmodul 22a. Die Kindersitzschutzvorrichtung umfasst ein zweites Seitenaufprallmodul 24a. Grundsätzlich ist es auch denkbar, dass die Kindersitzschutzvorrichtung weitere Seitenaufprallmodule 22a, 24a aufweist. Die Seitenaufprallmodule 22a, 24a sind jeweils auf einer Seite des Kopfbereichs 20a der Sitzschale 16a angeordnet. Die Seitenaufprallmodule 22a, 24a sind im Wesentlichen gleich ausgebildet, weswegen im Folgenden lediglich das eine Seitenaufprallmodul 22a näher beschrieben werden soll. Die Beschreibung für das Seitenaufprallmodul 22a kann dabei zur Erläuterung des zweiten Seitenaufprallmoduls 24a herangezogen werden.

Das Seitenaufprallmodul 22a ist auf einer Seite der Sitzschale 16a angeordnet. Das erste Seitenaufprallmodul 22a ist dabei auf einer, in Sitzrichtung gesehen, linken Seite der Sitzschale 16a in dem Kopfbereich 20a angeordnet. Das zweite Seitenaufprallmodul 24a ist auf einer gegenüberliegenden Seite, der, in Sitzrichtung gesehen, rechten Seite der Sitzschale 16a angeordnet. Das Seitenaufprallmodul 22a ist dazu vorgesehen, seitlich auf den Kindersitz 10a einwirkende Aufprallenergie aufzunehmen. Dabei ist das Seitenaufprallmodul 22a insbesondere zur Aufnahme von, von der Seite, auf der das Seitenaufprallmodul 22a an der Sitzschale 16a angeordnet ist, kommender Aufprallenergie vorgesehen. Insbesondere bei Unfällen mit Seitenaufprall an dem Kraftfahrzeug sind Kinder in Kindersitzen nicht so gut von dem Kraftfahrzeug geschützt wie bei einem Frontalaufprall, da das Kraftfahrzeug im Bereich der Seitentüren, die seitlich eines in dem Kraftfahrzeug angeordneten Kindersitzes 10a liegen, nur einen geringen Seitenaufprallschutz aufweist. Eine kinetische Aufprallenergie, die seitlich, also von einer Seitentür des Kraftfahrzeugs auf den Kindersitz 10a einwirkt, wird von dem entsprechenden Seitenaufprallmodul 22a, 24a, das der Seite bzw. der Seitentür des Kraftfahrzeugs zugewandt ist, zumindest teilweise aufgenommen. Dadurch, dass das Seitenaufprallmodul 22a, 24a jeweils zumindest einen Teil der Aufprallenergie, die seitlich auf den Kindersitz 10a einwirkt, aufnimmt, kann die effektiv auf das in dem Kindersitz 10a sitzende Kind oder Baby wirkende Aufprallenergie vorteilhaft reduziert werden. Dadurch kann eine Sicherheit des in dem Kindersitz 10a sitzenden Kinds oder Babys vorteilhaft erhöht werden. Die seitlich einwirkende Aufprallenergie wird dabei beispielsweise durch einen Seitenaufprall durch die in den Innenraum des Kraftfahrzeugs gegen den Kindersitz 10a gedrückte Seitentür auf den Kindersitz 10a übertragen.

Das Seitenaufprallmodul 22a ist als ein Modul ausgebildet, das in einem fertig montierten Zustand mit der Sitzschale 16a des Kindersitzes 10a verbindbar ist. Figur 2 zeigt dabei ein fertig vormontiertes Seitenaufprallmodul 22a, welches in die Sitzschale 16a des Kindersitzes 10a montierbar ist. Zur Aufnahme der Seitenaufprallmodule 22a, 24a weist die Sitzschale 16a des Kindersitzes 10a in dem Kopfbereich 20a auf beiden Seiten der Sitzschale 16a jeweils eine Aufnahme auf. Über die Aufnahmen sind die Seitenaufprallmodule 22a, 24a über eine Kraft- und/oder Formschlussverbindung verliersicher mit der Sitzschale 16a gekoppelt. Grundsätzlich ist es auch denkbar, dass die Seitenaufprallmodule 22a, 24a nicht als separat ausgebildete Module ausgebildet sind, die in vormontiertem Zustand mit der Sitzschale 16a verbindbar sind, sondern mit ihren Komponenten direkt an die Sitzschale 16a montiert werden. Grundsätzlich ist es auch denkbar, dass zumindest Teile der Seitenaufprallmodule 22a, 24a zumindest teilweise einstückig mit der Sitzschale 16a ausgebildet sind.

Das Seitenaufprallmodul 22a weist ein Seitenaufprallelement 26a auf. Das Seitenaufprallelement 26a bildet eine Aufprallfläche 28a aus, über die eine Aufprallenergie während eines Unfalls in das Seitenaufprallmodul 22a eingeleitet werden kann. Das Seitenaufprallelement 26a ist dabei aus einem starren Material gebildet. Das Seitenaufprallelement 26a ist aus einem Hartplastik gebildet. Grundsätzlich ist es auch denkbar, dass das Seitenaufprallelement 26a aus einem anderen, dem Fachmann als sinnvoll erscheinenden Material gebildet ist, wie beispielsweise aus einem Faserverbundwerkstoff, wie insbesondere einem kohle- oder glasfaserverstärkten Kunststoff. Das Seitenaufprallelement 26a weist eine Ruhestellung und eine Funktionsstellung auf. Das Seitenaufprallelement 26a ist zwischen der Ruhestellung und der Funktionsstellung verstellbar. Dabei ist das Seitenaufprallelement 26a händisch zwischen der Ruhestellung und der Funktionsstellung verstellbar. In der Ruhestellung ist das Seitenaufprallelement 26a an die Sitzschale 16a angeklappt. Dabei ist das Seitenaufprallelement 26a in der Ruhestellung möglichst platzsparend an der Sitzschale 16a des Kindersitzes 10a angeordnet. In der Ruhestellung ist das Seitenaufprallelement 26a im Wesentlichen parallel zu einer Außenkontur des Bereiches der Sitzschale 16a, in der es angeordnet ist, ausgerichtet. Das Seitenaufprallelement 26a steht in der Ruhestellung nicht von der Außenkontur der Sitzschale 16a ab. In der Funktionsstellung ist das Seitenaufprallelement 26a zumindest teilweise von der Sitzschale 16a nach außen wegbewegt. Dazu ist das Seitenaufprallelement 26a schwenkbar gelagert. Das Seitenaufprallelement 26a ist als ein verschwenkbarer Flügel ausgebildet, der mit einem Ende schwenkbar gelagert ist. Dabei ist das Seitenaufprallelement 26a mit einem hinteren Ende schwenkbar gelagert. Das hintere Ende des Seitenaufprallelements 26a ist sowohl in der Ruhestellung als auch in der Funktionsstellung der Sitzschale 16a zugewandt. Grundsätzlich ist es auch denkbar, dass das Seitenaufprallelement 26a an einem vorderen Ende schwenkbar mit der Sitzschale 16a gekoppelt ist. Es ist grundsätzlich ebenfalls denkbar, dass das Seitenaufprallelement 26a an einer anderen Seite schwenkbar mit der Sitzschale 16a gelagert ist oder dass das Seitenaufprallelement 26a über eine Linearführung linear zwischen der Ruhestellung und der Funktionsstellung verstellbar ist. In der Funktionsstellung ist das Seitenaufprallelement 26a, schräg zu der Sitzschale 16a angeordnet. Das vordere Ende des Seitenaufprallelements 26a, über das das Seitenaufprallelement 26a nicht schwenkbar gelagert ist, ist in der Funktionsstellung von der Sitzschale 16a beabstandet angeordnet. Durch die schräge Anordnung des Seitenaufprallelements 26a können zumindest Teile einer Aufprallenergie nach hinten abgeleitet und so bei dem Unfall über die Rückenlehne 14a des Kindersitzes 10a an dem in dem Kindersitz 10a sitzenden Kind vorbeigeleitet werden.

Das Seitenaufprallmodul 22a umfasst ein Absorptionselement 30a. Das Absorptionselement 30a ist dazu vorgesehen, eine auf das Seitenaufprallmodul 22a einwirkende Aufprallenergie umzuwandeln. Das Absorptionselement 30a wandelt bei einem Unfall die einwirkende kinetische Aufprallenergie, die auf den Kindersitz 10a und insbesondere das Seitenaufprallmodul 22a wirkt, in eine andere Energieform um, um so die auf das in dem Kindersitz 10a sitzende Kind wirkende effektiv kinetische Aufprallenergie zu verringern. Das Absorptionselement 30a ist in der Funktionsstelllung funktional zwischen dem Seitenaufprallelement 26a und der Sitzschale 16a angeordnet. Das Absorptionselement 30a ist an einem vorderen Ende des Seitenaufprallelements 26a angeordnet. Dabei ist das Absorptionselement 30a mit einem ersten Ende mit dem vorderen Ende des Seitenaufprallelements 26a gekoppelt. Das Absorptionselement 30a ist in einem Bereich des vorderen Endes des Seitenaufprallelements 26a mit seinem zweiten Ende mit der Sitzschale 16a gekoppelt. Das Absorptionselement 30a verbindet das Seitenaufprallelement 26a an seinem vorderen Ende mit der Sitzschale 16a. Das Absorptionselement 30a ist beweglich mit dem Seitenaufprallelement 26a gekoppelt. Dabei ist das Absorptionselement 30a über eine Drehlagerung mit dem Seitenaufprallelement 26a gekoppelt. Über die Drehlagerung 44a ist das Absorptionselement 30a drehbar mit dem Seitenaufprallelement 26a verbunden. Dabei lässt sich das Absorptionselement 30a aus einer Ruhestellung über die Drehlagerung 44a in seine Funktionsstellung verschwenken. In der Ruhestellung ist das Absorptionselement 30a im Wesentlichen parallel zu dem Seitenaufprallelement 26a ausgerichtet. Dabei ist das Absorptionselement 30a an einer Innenseite des Seitenaufprallelements 26a angeordnet, die der Sitzschale 16a zugewandt ist. In der Ruhestellung ist das Absorptionselement 30a in einem Raum zwischen dem Seitenaufprallelement 26a und der Sitzschale 16a angeordnet. Dabei das Absorptionselement 30a in der Ruhestellung nicht dazu vorgesehen, eine Aufprallenergie, die auf das Seitenaufprallmodul 22a wirkt, aufzunehmen. In der Funktionsstellung ist das Absorptionselement 30a im Wesentlichen orthogonal zu dem Seitenaufprallelement 26a ausgerichtet. Dazu wird das Absorptionselement 30a aus seiner Ruhestellung herausgeschwenkt. Dabei wird das Absorptionselement 30a mit seinem zweiten Ende von dem Seitenaufprallelement 26a weggeschwenkt. Zur Kopplung des Absorptionselements 30a mit der Sitzschale 16a weist das Seitenaufprallmodul 22a eine sitzschalenseitige Koppelstelle 46a auf. Die Koppelstelle 46a weist ein Formschlusselement auf, in das das Absorptionselement 30a mit seinem zweiten Ende formschlüssig eingreifen kann. In der Funktionsstellung greift das Absorptionselement 30a mit seinem zweiten Ende in das Formschlusselement der Koppelstelle 46a ein und das Absorptionselement 30a ist dadurch zwischen der Sitzschale 16a und dem Seitenaufprallelement 26a ausgerichtet. Grundsätzlich ist es auch denkbar, dass die Koppelstelle 46a ein Sicherungselement aufweist, über das das Absorptionselement 30a in der Funktionsstellung in der Koppelstelle 46a gesichert wird, um ein unerwünschtes Lösen des Absorptionselements 30a aus der Koppelstelle 46a zu verhindern. Das Absorptionselement 30a ist in der Funktionsstellung zwischen dem Seitenaufprallelement 26a und der Sitzschale 16a arretiert. Dadurch kann verhindert werden, dass bei einer Krafteinwirkung auf das Seitenaufprallelement 26a das Absorptionselement 30a eingeklappt wird.

Das Absorptionselement 30a ist dazu vorgesehen, die kinetische Aufprallenergie durch plastische Verformung aufzunehmen. Das Absorptionselement 30a ist dazu vorgesehen, die kinetische Aufprallenergie in Verformungsenergie umzuwandeln. Dazu ist das Absorptionselement 30a so plastisch verformbar ausgebildet, dass es bei einem Einwirken der Aufprallenergie verformt wird und dadurch die Aufprallenergie zumindest teilweise aufnimmt. Durch die Verformung wandelt das Absorptionselement 30a zumindest einen Teil der auf das Seitenaufprallmodul 22a wirkenden Aufprallenergie in Verformungsenergie um, die zur Verformung des Absorptionselements 30a benötigt wird. Das Absorptionselement 30a ist als ein verformbares Blech ausgebildet. Dabei ist das Absorptionselement 30a aus einem biegeweichen Blech gebildet, das sich bei Krafteinwirkung verformt. Das Absorptionselement 30a ist insbesondere nicht aus einem spröden Blech gebildet. Das Absorptionselement 30a weist einen U-förmigen Querschnitt auf. Grundsätzlich wäre es auch denkbar, dass der Querschnitt des Absorptionselements 30a leicht von einer U-Form abweicht und beispielsweise eher eine V-Form ausbildet. Das Absorptionselement 30a weist eine Mittelwandung 32a auf, die sich in einer Haupterstreckungsrichtung des Absorptionselements 30a erstreckt. An den beiden Seitenkanten der Mittelwandung 32a bildet das Absorptionselement 30a jeweils eine Seitenwandung 34a, 36a aus, die orthogonal zu der Mittelwandung 32a ausgerichtet ist. Die Seitenwandungen 34a, 36a erstrecken sich von einer ersten Seite der Mittelwandung 32a in die gleiche Richtung von der Mittelwandung 32a weg. Die beiden Seitenwandungen 34a, 36 weisen, von der Mittelwandung 32a aus gemessen, eine gleiche Höhe auf. Durch den U-förmigen Querschnitt weist das Absorptionselement 30a eine besonders vorteilhafte Steifigkeit auf. Das Absorptionselement 30a weist eine vordefinierte Biegekante 38a auf. Die Biegekante 38a verläuft orthogonal zu der Haupterstreckungsrichtung des Absorptionselements 30a. Die vordefinierte Biegekante 38a ist in die Mittelwandung 32a des Absorptionselements 30a eingebracht. Dabei ist die vordefinierte Biegekante 38a in Haupterstreckungsrichtung des Absorptionselements 30a mittig in der Mittelwandung 32a angeordnet. Grundsätzlich ist es auch denkbar, dass die Biegekante 38a zur Einstellung vorteilhafter Verformungen außermittig angeordnet ist. Um die Biegekante 38a ist das Absorptionselement 30a um zwei Grad gebogen. Dabei sind die beiden Seiten des Absorptionselements 30a in die gleiche Richtung gebogen, in die sich die Seitenwandungen 34a, 36a von der Mittelwandung 32a wegerstrecken. Die Seitenwandungen 34a, 36a, weisen jeweils in dem Bereich der vordefinierten Biegekante 38a jeweils eine Nut 40a, 42a auf. Die Nuten 40a, 42a, sind dazu vorgesehen, dass eine besonders vorteilhafte Verformung des Absorptionselements 30a zur Aufnahme der Aufprallenergie bei einem Unfall erreicht werden kann.

Folgend soll kurz beispielhaft die Funktionsweise des Seitenaufprallmoduls 22a beschrieben werden. Wird der Kindersitz 10a in einem Kraftfahrzeug auf der Sitzbank des Kraftfahrzeugs angebracht und gesichert, wird das Seitenaufprallmodul 22a von seiner Ruhestellung in die Funktionsstellung verstellt. Dabei wird das Seitenaufprallelement 26a von seiner an der Sitzschale 16a angeklappten Ruhestellung mit seinem vorderen Ende nach außen weggeklappt. Dabei klappt das mit der Sitzschale 16a und dem Seitenaufprallelement 26a gelenkig gelagerte Absorptionselement 30a ebenfalls aus seiner Ruhestellung und wird in seine Funktionsstellung überführt. In der Funktionsstellung erstreckt sich das Absorptionselement 30a zwischen dem vorderen Ende des Seitenaufprallelements 26a und der Sitzschale 16a und ist dabei fest in der Koppelstelle 46a angeordnet. In dem Falle eines Unfalls, der einen Seitenaufprall des Kraftfahrzeugs beinhaltet, wird beispielsweise die Seitentür des Kraftfahrzeugs in Richtung des Kindersitzes 10a gedrückt. Das Seitenaufprallelement 26a des Seitenaufprallmoduls 22a ist in seiner Funktionsstellung der Seitentür am nächsten und kommt dadurch zunächst mit der sich nach innen bewegenden Seitentür in Kontakt. Die sich nach innen bewegende Seitentür überträgt eine Aufprallenergie auf das Seitenaufprallmodul 22a. Insbesondere überträgt die Seitentür die Aufprallenergie auf das Seitenaufprallelement 26a. Das Seitenaufprallelement 26a wird dadurch nach innen in Richtung der Sitzschale 16a gedrückt. Das funktional zwischen dem Seitenaufprallelement 26a und der Sitzschale 16a in seiner Funktionsstellung arretierte Absorptionselement 30a wird durch das nach innen gedrückte Seitenaufprallelement 26a verformt. Das Absorptionselement 30a verformt sich und wandelt dadurch zumindest einen Teil der kinetischen Aufprallenergie in Verformungsenergie und Wärmeenergie um.

Dabei wird das Absorptionselement 30a vorzugsweise entlang der vordefinierten Biegekante 38a gebogen. Grundsätzlich ist es auch denkbar, dass sich das Absorptionselement 30a auf weitere Arten verformt. Denkbar ist auch, dass ein Teil der kinetischen Aufprallenergie hinter dem in dem Kindersitz 10a sitzenden Kind vorbei durch die Rückenlehne 14a geleitet wird. Durch die Aufnahme eines Teils der über das Seitenaufprallmodul 22a auf den Kindersitz 10a wirkenden kinetischen Aufprallenergie durch das Absorptionselement 30a wird die effektiv auf das Kind wirkende kinetische Aufprallenergie bei dem Unfall verringert. Die effektiv auf das in dem Kindersitz 10a sitzende Kind wirkende Aufprallenergie wird durch das Seitenaufprallmodul 22a im Vergleich zu einem Kindersitz ohne Seitenaufprallmodul 22a vorteilhaft verringert. Dadurch kann eine Sicherheit des Kindes in dem Kindersitz 10a, der die Seitenaufprallmodule 22a, 24a aufweist, vorteilhaft erhöht werden.

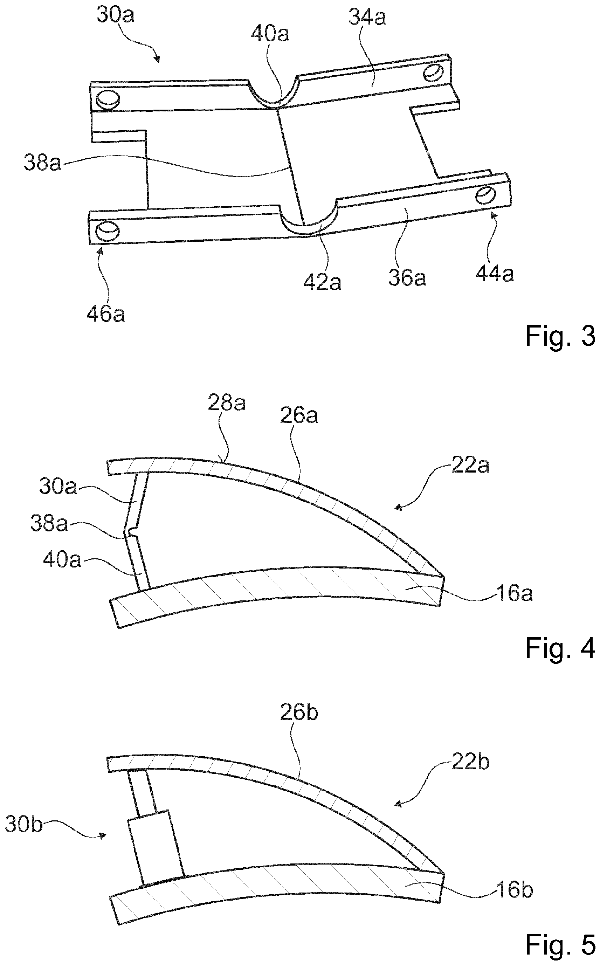

In den Figuren 5 bis 12 sind acht weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 12 ist der Buchstabe a durch die Buchstaben b bis i ersetzt.

Figur 5 zeigt ein zweites Ausführungsbeispiel einer erfindungsgemäßen Kindersitzschutzvorrichtung. Die Kinderschutzvorrichtung ist Teil eines nicht näher dargestellten Kindersitzes. Der Kindersitz ist als ein Kraftfahrzeugkindersitz ausgebildet. Der Kindersitz umfasst eine Sitzschale 16b, die den Kindersitz zumindest im Bereich eines Sitzbodens und einer Rückenlehne des Kindersitzes seitlich und nach hinten begrenzt. Die Sitzschale 16b bildet einen unteren Bodenbereich und einen über dem Bodenbereich angeordneten Kopfbereich. Der Kindersitz ist im Wesentlichen gleich ausgebildet wie der Kindersitz des ersten Ausführungsbeispiels aus den Figuren 1 bis 4. Die Kindersitzschutzvorrichtung umfasst ein erstes Seitenaufprallmodul 22b und ein nicht näher dargestelltes zweites Seitenaufprallmodul. Das Seitenaufprallmodul 22b ist auf einer Seite der Sitzschale 16b angeordnet. Das erste Seitenaufprallmodul 22b ist dabei in dem Kopfbereich angeordnet. Das Seitenaufprallmodul 22b ist dazu vorgesehen, seitlich auf den Kindersitz einwirkende Aufprallenergie aufzunehmen. Das Seitenaufprallmodul 22b weist ein Seitenaufprallelement 26b auf. Das Seitenaufprallelement 26b bildet eine Aufprallfläche 28b aus, über die eine Aufprallenergie während eines Unfalls in das Seitenaufprallmodul 22b eingeleitet werden kann. Das Seitenaufprallelement 26b ist zwischen der Ruhestellung und der Funktionsstellung verstellbar.

Das Seitenaufprallmodul 22b umfasst ein Absorptionselement 30b. Das Absorptionselement 30b ist dazu vorgesehen, eine auf das Seitenaufprallmodul 22b einwirkende Aufprallenergie umzuwandeln. Das Absorptionselement 30b ist in der Funktionsstellung funktional zwischen dem Seitenaufprallelement 26b und der Sitzschale 16b angeordnet. Im Unterschied zu dem vorhergehenden Ausführungsbeispiel ist insbesondere das Absorptionselement 30b anders ausgeführt. Das Absorptionselement 30b ist als ein Federelement ausgebildet. Dabei ist das Absorptionselement 30b als eine Fluidfeder ausgebildet. Insbesondere ist das Federelement als eine Gasdruckfeder ausgebildet. In der Funktionsstellung ist das als Gasdruckfeder ausgebildete Absorptionselement 30b ausgefahren. Wird bei einem Unfall eine kinetische Aufprallenergie über das Seitenaufprallelement 26b in das Absorptionselement 30b eingeleitet, wird das als Gasdruckfeder ausgebildete Absorptionselement 30b gestaucht und das in dem Absorptionselement 30b befindliche Gas komprimiert. Dadurch wird zumindest ein Teil der kinematischen Aufprallenergie in Kompressions- und Wärmeenergie umgewandelt, wodurch die effektiv auf das in dem Kindersitz sitzende Kind einwirkende kinetische Aufprallenergie vorteilhaft verringert wird.

Grundsätzlich ist es ebenfalls denkbar, dass das als Federelement ausgebildete Absorptionselement 30b als eine andere, dem Fachmann als sinnvoll erscheinende Fluidfeder ausgebildet ist. Dabei wäre es grundsätzlich auch denkbar, dass das Absorptionselement 30b als ein Stoßdämpfer ausgebildet ist und neben dem Federelement zusätzlich ein Dämpferelement aufweist. Das in der Figur 5 dargestellte Seitenaufprallmodul ist dabei zur Vereinfachung lediglich schematisch dargestellt.

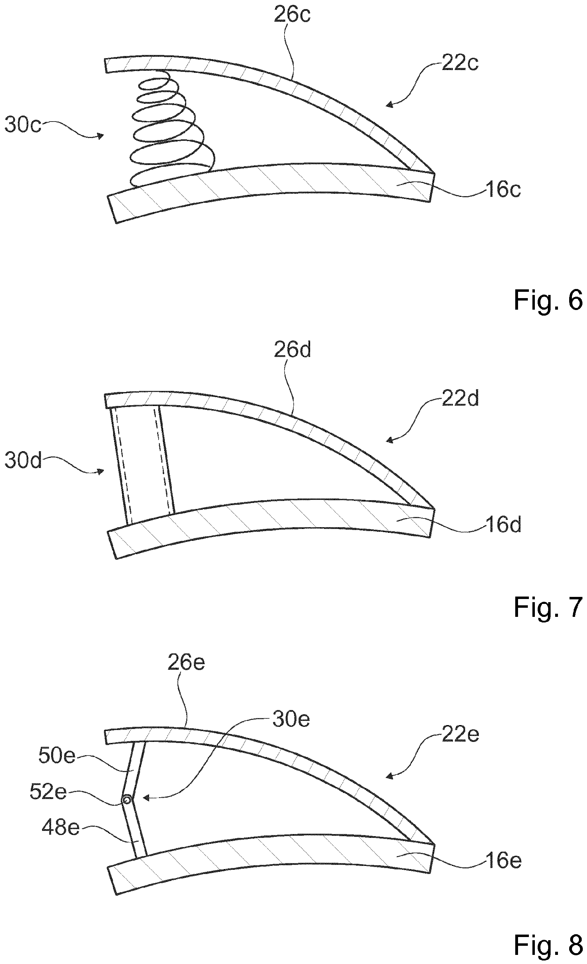

Die Figur 6 zeigt ein drittes Ausführungsbeispiel einer erfindungsgemäßen Kindersitzschutzvorrichtung. Die Kinderschutzvorrichtung ist Teil eines nicht näher dargestellten Kindersitzes. Der Kindersitz ist als ein Kraftfahrzeugkindersitz ausgebildet. Der Kindersitz umfasst eine Sitzschale 16c, die den Kindersitz zumindest im Bereich eines Sitzbodens und einer Rückenlehne des Kindersitzes seitlich und nach hinten begrenzt. Die Sitzschale 16c bildet einen unteren Bodenbereich und einen über dem Bodenbereich angeordneten Kopfbereich. Der Kindersitz ist im Wesentlichen gleich ausgebildet wie der Kindersitz des ersten Ausführungsbeispiels aus den Figuren 1 bis 4. Die Kindersitzschutzvorrichtung umfasst ein erstes Seitenaufprallmodul 22c und ein nicht näher dargestelltes zweites Seitenaufprallmodul. Das Seitenaufprallmodul 22c ist auf einer Seite der Sitzschale 16c angeordnet. Das erste Seitenaufprallmodul 22c ist dabei in dem Kopfbereich angeordnet. Das Seitenaufprallmodul 22c ist dazu vorgesehen, seitlich auf den Kindersitz einwirkende Aufprallenergie aufzunehmen. Das Seitenaufprallmodul 22c weist ein Seitenaufprallelement 26c auf. Das Seitenaufprallelement 26c bildet eine Aufprallfläche 28c aus, über die eine Aufprallenergie während eines Unfalls in das Seitenaufprallmodul 22c eingeleitet werden kann. Das Seitenaufprallelement 26c ist zwischen der Ruhestellung und der Funktionsstellung verstellbar.

Das Seitenaufprallmodul 22c umfasst ein Absorptionselement 30c. Das Absorptionselement 30c ist dazu vorgesehen, eine auf das Seitenaufprallmodul 22c einwirkende Aufprallenergie umzuwandeln. Das Absorptionselement 30c ist in der Funktionsstellung funktional zwischen dem Seitenaufprallelement 26c und der Sitzschale 16c angeordnet. Im Unterschied zu den vorhergehenden Ausführungsbeispielen ist insbesondere das Absorptionselement 30c anders ausgeführt. Das Absorptionselement 30c ist als ein Federelement ausgebildet. Dabei ist das Absorptionselement 30c als eine mechanische Feder ausgebildet. Das Absorptionselement 30c ist dabei als eine Schraubenfeder ausgebildet. Grundsätzlich ist es auch denkbar, dass das als mechanisches Federelement ausgebildete Absorptionselement 30c als eine Blattfeder, eine Tellerfeder oder eine andere, dem Fachmann als sinnvoll erscheinende mechanische Feder ausgebildet ist. In der Funktionsstellung ist das als mechanische Feder ausgebildete Absorptionselement 30c ausgefahren. Wird bei einem Unfall eine kinetische Aufprallenergie über das Seitenaufprallelement 26c in das Absorptionselement 30c eingeleitet, wird das als mechanische Feder ausgebildete Absorptionselement 30c elastisch verformt. Dadurch wird zumindest ein Teil der kinematischen Aufprallenergie in Kompressions- und Wärmeenergie umgewandelt, wodurch die effektiv auf das in dem Kindersitz sitzende Kind einwirkende kinetische Aufprallenergie vorteilhaft verringert wird. Das in der Figur 6 dargestellte Seitenaufprallmodul ist dabei zur Vereinfachung lediglich schematisch dargestellt.

Die Figur 7 zeigt ein viertes Ausführungsbeispiel einer erfindungsgemäßen Kindersitzschutzvorrichtung in einer vereinfachten schematischen Darstellung. Die Kinderschutzvorrichtung ist Teil eines nicht näher dargestellten Kindersitzes. Der Kindersitz ist als ein Kraftfahrzeugkindersitz ausgebildet. Der Kindersitz umfasst eine Sitzschale 16d, die den Kindersitz zumindest im Bereich eines Sitzbodens und einer Rückenlehne des Kindersitzes seitlich und nach hinten begrenzt. Die Sitzschale 16d bildet einen unteren Bodenbereich und einen über dem Bodenbereich angeordneten Kopfbereich. Der Kindersitz ist im Wesentlichen gleich ausgebildet wie der Kindersitz des ersten Ausführungsbeispiels aus den Figuren 1 bis 4. Die Kindersitzschutzvorrichtung umfasst ein erstes Seitenaufprallmodul 22d und ein nicht näher dargestelltes zweites Seitenaufprallmodul. Das Seitenaufprallmodul 22d ist auf einer Seite der Sitzschale 16d angeordnet. Das erste Seitenaufprallmodul 22d ist dabei in dem Kopfbereich angeordnet. Das Seitenaufprallmodul 22d ist dazu vorgesehen, seitlich auf den Kindersitz einwirkende Aufprallenergie aufzunehmen. Das Seitenaufprallmodul 22d weist ein Seitenaufprallelement 26d auf. Das Seitenaufprallelement 26d bildet eine Aufprallfläche 28d aus, über die eine Aufprallenergie während eines Unfalls in das Seitenaufprallmodul 22d eingeleitet werden kann. Das Seitenaufprallelement 26d ist zwischen der Ruhestellung und der Funktionsstellung verstellbar.

Das Seitenaufprallmodul 22d umfasst ein Absorptionselement 30d. Das Absorptionselement 30d ist dazu vorgesehen, eine auf das Seitenaufprallmodul 22d einwirkende Aufprallenergie umzuwandeln. Das Absorptionselement 30d ist in der Funktionsstellung funktional zwischen dem Seitenaufprallelement 26d und der Sitzschale 16d angeordnet. Im Unterschied zu den vorhergehenden Ausführungsbeispielen ist insbesondere das Absorptionselement 30d anders ausgeführt. Das Absorptionselement 30d ist dazu vorgesehen, durch plastische Verformung eine kinetische Aufprallenergie umzuwandeln. Das Absorptionselement 30d ist als ein verformbares Rohr ausgebildet. In der Funktionsstellung ist das Absorptionselement 30d im Wesentlichen äquivalent zu den Absorptionselementen der vorhergehenden Ausführungsbeispiele zwischen dem Seitenaufprallelement 26d und der Sitzschale 16d angeordnet. Wird bei einem Unfall eine kinetische Aufprallenergie über das Seitenaufprallelement 26d in das Absorptionselement 30d eingeleitet, wird das als verformbares Rohr ausgebildete Absorptionselement 30d plastisch verformt. Dadurch wird zumindest ein Teil der kinematischen Aufprallenergie in Verformungs- und Wärmeenergie umgewandelt, wodurch die effektiv auf das in dem Kindersitz sitzende Kind einwirkende kinetische Aufprallenergie vorteilhaft verringert wird. Grundsätzlich wäre es auch denkbar, dass das Absorptionselement 30d als ein kollabierendes Rohr oder als ein Biegestab ausgebildet ist und dabei ebenfalls durch plastische Verformung eine Aufprallenergie aufnehmen kann. Das in der Figur 7 dargestellte Seitenaufprallmodul 22d ist dabei zur Vereinfachung lediglich schematisch dargestellt.

Die Figur 8 zeigt ein fünftes Ausführungsbeispiel einer erfindungsgemäßen Kindersitzschutzvorrichtung in einer vereinfachten schematischen Darstellung. Die Kinderschutzvorrichtung ist Teil eines nicht näher dargestellten Kindersitzes. Der Kindersitz ist als ein Kraftfahrzeugkindersitz ausgebildet. Der Kindersitz umfasst eine Sitzschale 16e, die den Kindersitz zumindest im Bereich eines Sitzbodens und einer Rückenlehne des Kindersitzes seitlich und nach hinten begrenzt. Die Sitzschale 16e bildet einen unteren Bodenbereich und einen über dem Bodenbereich angeordneten Kopfbereich. Der Kindersitz ist im Wesentlichen gleich ausgebildet wie der Kindersitz des ersten Ausführungsbeispiels aus den Figuren 1 bis 4. Die Kindersitzschutzvorrichtung umfasst ein erstes Seitenaufprallmodul 22e und ein nicht näher dargestelltes zweites Seitenaufprallmodul. Das Seitenaufprallmodul 22e ist auf einer Seite der Sitzschale 16e angeordnet. Das erste Seitenaufprallmodul 22e ist dabei in dem Kopfbereich angeordnet. Das Seitenaufprallmodul 22e ist dazu vorgesehen, seitlich auf den Kindersitz einwirkende Aufprallenergie aufzunehmen. Das Seitenaufprallmodul 22e weist ein Seitenaufprallelement 26e auf. Das Seitenaufprallelement 26e bildet eine Aufprallfläche 28e aus, über die eine Aufprallenergie während eines Unfalls in das Seitenaufprallmodul 22e eingeleitet werden kann. Das Seitenaufprallelement 26e ist zwischen der Ruhestellung und der Funktionsstellung verstellbar.

Das Seitenaufprallmodul 22e umfasst ein Absorptionselement 30e. Das Absorptionselement 30e ist dazu vorgesehen, eine auf das Seitenaufprallmodul 22e einwirkende Aufprallenergie umzuwandeln. Das Absorptionselement 30e ist in der Funktionsstellung funktional zwischen dem Seitenaufprallelement 26e und der Sitzschale 16e angeordnet. Im Unterschied zu den vorhergehenden Ausführungsbeispielen ist insbesondere das Absorptionselement 30e anders ausgeführt. Das Absorptionselement 30e ist als eine Kniehebelmechanik ausgebildet. Das als Kniehebelmechanik ausgebildete Absorptionselement 30e weist einen ersten Hebel 48e und einen zweiten Hebel 50e auf. Die beiden Hebel 48e, 50e des Absorptionselements 30e sind über eine Lagerstelle 52e an ihren einander zugewandten ersten Enden schwenkbar miteinander gekoppelt. Die Lagerstelle 52e ist dabei reibbehaftet. Die beiden Hebel 48e, 50e lassen sich nur durch Überwindung einer Reibkraft gegeneinander verdrehen. Dabei ist es denkbar, dass die Lagerstelle 52e dabei zusätzliche Reibelemente aufweist, die jeweils mit einem der Hebel 48e, 50e verbunden sind und miteinander in einem Reibkontakt stehen. An einem der Lagerstelle 52e abgewandten ersten Ende ist der erste Hebel 48e schwenkbar mit der Sitzschale 16e gekoppelt. An einem der Lagerstelle 52e abgewandten zweiten Ende ist der zweite Hebel 50e schwenkbar mit der Sitzschale 16e gekoppelt. In einer Funktionsstellung des Absorptionselements 30e sind die Hebel 48e, 50e im Wesentlichen parallel zueinander ausgerichtet. Die Hebel 48e, 50e des Absorptionselements 30e sind dabei jedoch leicht zueinander geneigt, um eine Klapprichtung während eines Unfalls vorzudefinieren. Dabei sind die zweiten Enden der Hebel 48e, 50e im Wesentlichen in entgegengesetzte Richtungen ausgerichtet. In einer Ruhestellung sind die Hebel 48e, 50e im Wesentlichen parallel nebeneinander angeordnet, wobei ihre zweiten Enden im Wesentlichen in dieselbe Richtung gerichtet sind. Wird bei einem Unfall eine kinetische Aufprallenergie über das Seitenaufprallelement 26e in das Absorptionselement 30e eingeleitet, werden die beiden Hebel 48e, 50e über die Lagerstelle 52e zueinander verdreht. Durch die reibbehaftete Lagerung über die Lagerstelle 52e wird dabei ein Teil der kinetischen Aufprallenergie über die Reibung in der Lagerstelle 52e in Wärmeenergie umgewandelt. Dadurch wird zumindest ein Teil der kinematischen Aufprallenergie in Wärmeenergie umgewandelt, wodurch die effektiv auf das in dem Kindersitz sitzende Kind einwirkende kinetische Aufprallenergie vorteilhaft verringert wird. Durch eine Einstellung eines Reibwerts zwischen den Hebeln 48e, 50e kann eine aufnehmbare Aufprallenergie vorteilhaft eingestellt werden. Zusätzlich ist es denkbar, dass das Absorptionselement 30e zusätzlich ein zwischen den beiden Hebeln 48e, 50e angeordnetes Federelement aufweist, das die Hebelelemente in ihre Funktionsstellung drückt, um dadurch einer einwirkenden Aufprallenergie eine zusätzliche Kraft entgegenzustellen. Dadurch könnte die effektiv auf das in dem Kindersitz sitzende Kind einwirkende Aufprallenergie zusätzlich abgeschwächt werden. Das in der Figur 8 dargestellte Seitenaufprallmodul 22e ist dabei zur Vereinfachung lediglich schematisch dargestellt.

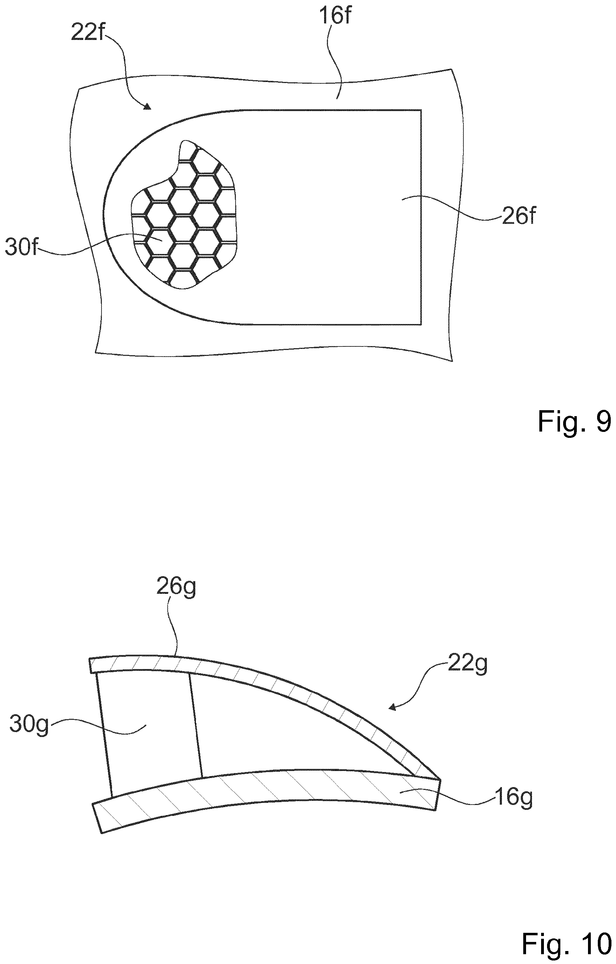

Die Figur 9 zeigt ein sechstes Ausführungsbeispiel einer erfindungsgemäßen Kindersitzschutzvorrichtung in einer vereinfachten schematischen Darstellung. Die Kinderschutzvorrichtung ist Teil eines nicht näher dargestellten Kindersitzes. Der Kindersitz ist als ein Kraftfahrzeugkindersitz ausgebildet. Der Kindersitz umfasst eine Sitzschale 16f, die den Kindersitz zumindest im Bereich eines Sitzbodens und einer Rückenlehne des Kindersitzes seitlich und nach hinten begrenzt. Die Sitzschale 16f bildet einen unteren Bodenbereich und einen über dem Bodenbereich angeordneten Kopfbereich. Der Kindersitz ist im Wesentlichen gleich ausgebildet wie der Kindersitz des ersten Ausführungsbeispiels aus den Figuren 1 bis 4. Die Kindersitzschutzvorrichtung umfasst ein erstes Seitenaufprallmodul 22f und ein nicht näher dargestelltes zweites Seitenaufprallmodul. Das Seitenaufprallmodul 22f ist auf einer Seite der Sitzschale 16f angeordnet. Das erste Seitenaufprallmodul 22f ist dabei in dem Kopfbereich angeordnet. Das Seitenaufprallmodul 22f ist dazu vorgesehen, seitlich auf den Kindersitz einwirkende Aufprallenergie aufzunehmen. Das Seitenaufprallmodul 22f weist ein Seitenaufprallelement 26f auf. Das Seitenaufprallelement 26f bildet eine Aufprallfläche 28f aus, über die eine Aufprallenergie während eines Unfalls in das Seitenaufprallmodul 22f eingeleitet werden kann. Das Seitenaufprallelement 26f ist zwischen der Ruhestellung und der Funktionsstellung verstellbar.

Das Seitenaufprallmodul 22f umfasst ein Absorptionselement 30f. Das Absorptionselement 30f ist dazu vorgesehen, eine auf das Seitenaufprallmodul 22f einwirkende Aufprallenergie umzuwandeln. Das Absorptionselement 30f ist in der Funktionsstellung funktional zwischen dem Seitenaufprallelement 26f und der Sitzschale 16f angeordnet. Im Unterschied zu den vorhergehenden Ausführungsbeispielen ist insbesondere das Absorptionselement 30f anders ausgeführt. Das Absorptionselement 30f ist als eine Wabenstruktur ausgebildet. Das Absorptionselement 30f bildet mehrere Lagen von direkt aneinander angrenzenden Waben aus. Die Waben weisen dabei eine Sechseckform auf. Grundsätzlich ist es auch denkbar, dass die Waben eine andere, dem Fachmann als sinnvoll erscheinende Form aufweisen, wie beispielsweise eine Dreiecksform, eine Vierecksform oder eine Achtecksform. Grundsätzlich ist es auch denkbar, dass das Absorptionselement 30f lediglich eine Lage von aneinander angrenzenden Waben aufweist. Das Absorptionselement 30f, das die Waben ausbildet, ist dabei aus einem duktilen Werkstoff gebildet. Dadurch kann das Absorptionselement 30f vorteilhaft plastisch verformt werden und dadurch eine Aufprallenergie aufnehmen. Grundsätzlich ist es auch denkbar, dass in den Hohlräumen, die die Waben des Absorptionselements 30f ausbilden, zusätzlich ein Füllmaterial angeordnet ist, das eine Steifigkeit des Absorptionselements 30f und/oder eine Verformungseigenschaft positiv beeinflusst. Wird bei einem Unfall eine kinetische Aufprallenergie über das Seitenaufprallelement 26f in das Absorptionselement 30f eingeleitet, wird das Absorptionselement 30f, welches eine Wabenstruktur ausbildet, plastisch verformt. Dadurch wird zumindest ein Teil der kinematischen Aufprallenergie in Kompressions- und Wärmeenergie umgewandelt, wodurch die effektiv auf das in dem Kindersitz sitzende Kind einwirkende kinetische Aufprallenergie vorteilhaft verringert wird. Das in der Figur 9 dargestellte Seitenaufprallmodul 22f ist dabei zur Vereinfachung lediglich schematisch dargestellt.

Die Figur 10 zeigt ein siebtes Ausführungsbeispiel einer erfindungsgemäßen Kindersitzschutzvorrichtung in einer vereinfachten schematischen Darstellung. Die Kinderschutzvorrichtung ist Teil eines nicht näher dargestellten Kindersitzes. Der Kindersitz ist als ein Kraftfahrzeugkindersitz ausgebildet. Der Kindersitz umfasst eine Sitzschale 16g, die den Kindersitz zumindest im Bereich eines Sitzbodens und einer Rückenlehne des Kindersitzes seitlich und nach hinten begrenzt. Die Sitzschale 16g bildet einen unteren Bodenbereich und einen über dem Bodenbereich angeordneten Kopfbereich. Der Kindersitz ist im Wesentlichen gleich ausgebildet wie der Kindersitz des ersten Ausführungsbeispiels aus den Figuren 1 bis 4. Die Kindersitzschutzvorrichtung umfasst ein erstes Seitenaufprallmodul 22g und ein nicht näher dargestelltes zweites Seitenaufprallmodul. Das Seitenaufprallmodul 22g ist auf einer Seite der Sitzschale 16g angeordnet. Das erste Seitenaufprallmodul 22g ist dabei in dem Kopfbereich angeordnet. Das Seitenaufprallmodul 22g ist dazu vorgesehen, seitlich auf den Kindersitz einwirkende Aufprallenergie aufzunehmen. Das Seitenaufprallmodul 22g weist ein Seitenaufprallelement 26g auf. Das Seitenaufprallelement 26g bildet eine Aufprallfläche 28g aus, über die eine Aufprallenergie während eines Unfalls in das Seitenaufprallmodul 22g eingeleitet werden kann. Das Seitenaufprallelement 26g ist zwischen der Ruhestellung und der Funktionsstellung verstellbar.

Das Seitenaufprallmodul 22g umfasst ein Absorptionselement 30g. Das Absorptionselement 30g ist dazu vorgesehen, eine auf das Seitenaufprallmodul 22g einwirkende Aufprallenergie umzuwandeln. Das Absorptionselement 30g ist in der Funktionsstellung funktional zwischen dem Seitenaufprallelement 26g und der Sitzschale 16g angeordnet. Im Unterschied zu den vorhergehenden Ausführungsbeispielen ist insbesondere das Absorptionselement 30g anders ausgeführt. Das Absorptionselement 30g ist als ein Schaumelement ausgebildet. Das als Schaumelement ausgebildete Absorptionselement 30g ist dabei aus einem Schaum gebildet, der vorzugsweise durch plastische und/oder elastische Verformung eine Aufprallenergie aufnehmen kann. Dabei ist das als Schaumelement ausgebildete Absorptionselement 30g beispielsweise aus einem EPS, einem EPP einem EVA oder einem anderen, dem Fachmann als sinnvoll erscheinenden Schaum ausgebildet. Grundsätzlich ist es auch denkbar, dass das als Schaumelement ausgebildete Absorptionselement 30g aus mehreren Schäumen hergestellt ist. Grundsätzlich ist es auch denkbar, dass in das als Schaumelement ausgebildete Absorptionselement 30g zusätzliche Verstärkungselemente, wie beispielsweise Versteifungsstäbe, in den Schaum eingebracht sind. Wird bei einem Unfall eine kinetische Aufprallenergie über das Seitenaufprallelement 26g in das Absorptionselement 30g eingeleitet, wird das als Schaumelement ausgebildete Absorptionselement 30g plastisch und/oder elastisch verformt. Grundsätzlich ist es auch denkbar, dass das als Schaumelement ausgebildete Absorptionselement 30g zumindest teilweise zerstört wird. Dadurch wird zumindest ein Teil der kinematischen Aufprallenergie in Verformungs- und Wärmeenergie umgewandelt, wodurch die effektiv auf das in dem Kindersitz sitzende Kind einwirkende kinetische Aufprallenergie vorteilhaft verringert wird. Das in der Figur 10 dargestellte Seitenaufprallmodul 22g ist dabei zur Vereinfachung lediglich schematisch dargestellt.

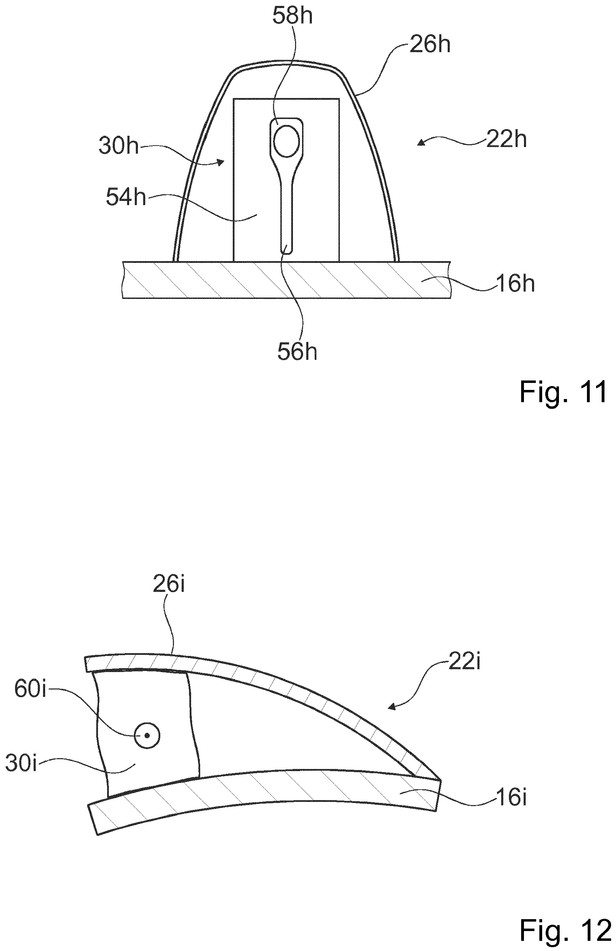

Die Figur 11 zeigt ein achtes Ausführungsbeispiel einer erfindungsgemäßen Kindersitzschutzvorrichtung in einer vereinfachten schematischen Darstellung. Die Kinderschutzvorrichtung ist Teil eines nicht näher dargestellten Kindersitzes. Der Kindersitz ist als ein Kraftfahrzeugkindersitz ausgebildet. Der Kindersitz umfasst eine Sitzschale 16h, die den Kindersitz zumindest im Bereich eines Sitzbodens und einer Rückenlehne des Kindersitzes seitlich und nach hinten begrenzt. Die Sitzschale 16h bildet einen unteren Bodenbereich und einen über dem Bodenbereich angeordneten Kopfbereich. Der Kindersitz ist im Wesentlichen gleich ausgebildet wie der Kindersitz des ersten Ausführungsbeispiels aus den Figuren 1 bis 4. Die Kindersitzschutzvorrichtung umfasst ein erstes Seitenaufprallmodul 22h und ein nicht näher dargestelltes zweites Seitenaufprallmodul. Das Seitenaufprallmodul 22h ist auf einer Seite der Sitzschale 16h angeordnet. Das erste Seitenaufprallmodul 22h ist dabei in dem Kopfbereich angeordnet. Das Seitenaufprallmodul 22h ist dazu vorgesehen, seitlich auf den Kindersitz einwirkende Aufprallenergie aufzunehmen. Das Seitenaufprallmodul 22h weist ein Seitenaufprallelement 26h auf. Das Seitenaufprallelement 26h bildet eine Aufprallfläche 28h aus, über die eine Aufprallenergie während eines Unfalls in das Seitenaufprallmodul 22h eingeleitet werden kann. Das Seitenaufprallelement 26h ist zwischen der Ruhestellung und der Funktionsstellung verstellbar.

Das Seitenaufprallmodul 22h umfasst ein Absorptionselement 30h. Das Absorptionselement 30h ist dazu vorgesehen, eine auf das Seitenaufprallmodul 22h einwirkende Aufprallenergie umzuwandeln. Das Absorptionselement 30h ist in der Funktionsstellung funktional zwischen dem Seitenaufprallelement 26h und der Sitzschale 16h angeordnet. Im Unterschied zu den vorhergehenden Ausführungsbeispielen ist insbesondere das Absorptionselement 30h anders ausgeführt. Das Absorptionselement 30h weist zumindest eine aufzubiegende Nut auf. Das Absorptionselement 30h ist von einer Trägerplatte 54h gebildet. In die Trägerplatte 54h ist eine Nut 56h eingebracht, die sich in der Funktionsstellung in Richtung der Sitzschale 16h verjüngt. Grundsätzlich ist es auch denkbar, dass die Nut mehrere Verjüngungen aufweist. Das Absorptionselement 30h weist ein Stiftelement 58h auf, das in der Funktionsstellung auf einer der Sitzschale 16h gegenüberliegenden Seite der Verjüngung in einer Aufweitung der Nut 56h angeordnet ist. Das Stiftelement 58h weist eine Breite auf, die größer ist als eine Breite der Nut 56h im Bereich ihrer Verjüngung. Das Stiftelement 58h ist fest mit dem Seitenaufprallelement 26h verbunden. Die Trägerplatte 54h, die die Nut 56h ausbildet, ist in der Funktionsstellung fest mit der Sitzschale 16h verbunden. Wird bei einem Aufprall eine Aufprallenergie über das Seitenaufprallelement 26h in das Seitenaufprallmodul 22h eingeleitet, wird das Seitenaufprallelement 26h in Richtung der Sitzschale 16h bewegt. Dadurch wird das fest mit dem Seitenaufprallelement 26h gekoppelte Stiftelement 58h in der Nut 56h in Richtung der Sitzschale 16h verfahren. Dabei verformt das Stiftelement 58h die Nut 56h im Bereich ihrer Verjüngung. Dadurch wird zumindest ein Teil der kinematischen Aufprallenergie in Verformungsund Wärmeenergie umgewandelt, wodurch die effektiv auf das in dem Kindersitz sitzende Kind einwirkende kinetische Aufprallenergie vorteilhaft verringert wird. Das in der Figur 11 dargestellte Seitenaufprallmodul 22h ist dabei zur Vereinfachung lediglich schematisch dargestellt.

Die Figur 12 zeigt ein neuntes Ausführungsbeispiel einer erfindungsgemäßen Kindersitzschutzvorrichtung in einer vereinfachten schematischen Darstellung. Die Kinderschutzvorrichtung ist Teil eines nicht näher dargestellten Kindersitzes. Der Kindersitz ist als ein Kraftfahrzeugkindersitz ausgebildet. Der Kindersitz umfasst eine Sitzschale 16i, die den Kindersitz zumindest im Bereich eines Sitzbodens und einer Rückenlehne des Kindersitzes seitlich und nach hinten begrenzt. Die Sitzschale 16i bildet einen unteren Bodenbereich und einen über dem Bodenbereich angeordneten Kopfbereich. Der Kindersitz ist im Wesentlichen gleich ausgebildet wie der Kindersitz des ersten Ausführungsbeispiels aus den Figuren 1 bis 4. Die Kindersitzschutzvorrichtung umfasst ein erstes Seitenaufprallmodul 22i und ein nicht näher dargestelltes zweites Seitenaufprallmodul. Das Seitenaufprallmodul 22i ist auf einer Seite der Sitzschale 16i angeordnet. Das erste Seitenaufprallmodul 22i ist dabei in dem Kopfbereich angeordnet. Das Seitenaufprallmodul 22i ist dazu vorgesehen, seitlich auf den Kindersitz einwirkende Aufprallenergie aufzunehmen. Das Seitenaufprallmodul 22i weist ein Seitenaufprallelement 26i auf. Das Seitenaufprallelement 26i bildet eine Aufprallfläche 28i aus, über die eine Aufprallenergie während eines Unfalls in das Seitenaufprallmodul 22i eingeleitet werden kann. Das Seitenaufprallelement 26i ist zwischen der Ruhestellung und der Funktionsstellung verstellbar.

Das Seitenaufprallmodul 22i umfasst ein Absorptionselement 30i. Das Absorptionselement 30i ist dazu vorgesehen, eine auf das Seitenaufprallmodul 22i einwirkende Aufprallenergie umzuwandeln. Das Absorptionselement 30i ist in der Funktionsstellung funktional zwischen dem Seitenaufprallelement 26i und der Sitzschale 16i angeordnet. Im Unterschied zu den vorhergehenden Ausführungsbeispielen ist insbesondere das Absorptionselement 30i anders ausgeführt. Das Absorptionselement 30i ist durch Verdrängung eines Fluids dazu vorgesehen, eine Aufprallenergie abzubauen. Das Absorptionselement 30i ist als ein elastischer, in der Funktionsstellung mit einem Gas, insbesondere mit Luft, gefüllter Hohlkörper ausgebildet, der ein Ventilelement 60i aufweist, durch das das in dem Hohlkörper angeordnete Gas beim Einwirken einer Aufprallenergie entweichen kann. Grundsätzlich ist es auch denkbar, dass das Absorptionselement 30i mehrere Ventilelemente aufweist. Wird bei einem Unfall eine kinetische Aufprallenergie über das Seitenaufprallelement 26i in das Absorptionselement 30i eingeleitet, wird der elastische Hohlkörper des Absorptionselements 30i verformt und gequetscht, wodurch das in dem Hohlkörper befindliche Gas durch das Ventilelement 60i entweicht. Dadurch wird die auf das Absorptionselement 30i wirkende kinetische Aufprallenergie in kinetische Energie zur Beschleunigung des Gases in Kompressionsenergie und Wärmeenergie umgewandelt, wodurch die effektiv auf das in dem Kindersitz sitzende Kind einwirkende kinetische Aufprallenergie vorteilhaft verringert wird. Grundsätzlich ist es auch denkbar, dass das Absorptionselement 30i statt des Ventilelements 60i eine andere Vorrichtung zum kontrollierten Entweichen des Fluids aus dem Hohlkörper aufweist, wie beispielsweise lediglich ein Loch. Das in der Figur 12 dargestellte Seitenaufprallmodul 22i ist dabei zur Vereinfachung lediglich schematisch dargestellt.

Grundsätzlich ist es auch denkbar, dass das Absorptionselement auf eine andere Weise ausgebildet ist und durch Verdrängung eines Fluids dazu eine Aufprallenergie abbaut. Dabei ist es beispielsweise denkbar, dass das Absorptionselement ein mit einem Fluid gefüllten Hohlkörper aufweist, in dem im Falle eines Unfalls durch das Einwirken der Aufprallenergie ein Verdrängungskörper eindringt, der durch seine Bewegung durch das Fluid die Aufprallenergie zumindest teilweise umwandelt. Grundsätzlich ist es auch denkbar, dass das Absorptionselement als eine mit einem Gel gefüllte Blase ausgebildet ist, wobei das Gel bei einem Einwirken von Aufprallenergie auf das Absorptionselement durch Strömen und durch Kompression zumindest einen Teil der Aufprallenergie aufnimmt.

Grundsätzlich ist es in einer weiteren Ausgestaltung ebenfalls denkbar, dass ein Absorptionselement und ein Seitenaufprallelement eines Seitenaufprallmoduls zumindest teilweise einstückig miteinander ausgebildet sind. Dabei ist es denkbar, dass das Seitenaufprallelement bei einem Einwirken einer Aufprallenergie selbst dazu vorgesehen ist, durch eine gezielte Verformung einen Teil der Aufprallenergie aufzunehmen. Grundsätzlich ist es ebenfalls denkbar, dass ein Seitenaufprallmodul mehrere Absorptionselemente aufweist, die entsprechend den oben ausgeführten Ausführungsbeispielen ausgeführt sind.

### Bezugszeichen

- 10: Kindersitz
- 12: Sitzboden
- 14: Rückenlehne
- 16: Sitzschale
- 18: Bodenbereich
- 20: Kopfbereich
- 22: Seitenaufprallmodul
- 24: Seitenaufprallmodul
- 26: Seitenaufprallelement
- 28: Aufprallfläche
- 30: Absorptionselement
- 32: Mittelwandung
- 34: Seitenwandung
- 36: Seitenwandung
- 38: Biegekante
- 40: Nut
- 42: Nut
- 44: Drehlagerung
- 46: Koppelstelle
- 48: Hebel
- 50: Hebel
- 52: Lagerstelle
- 54: Trägerplatte
- 56: Nut
- 58: Stiftelement
- 60: Ventilelement

## Patentansprüche

1. Kindersitzschutzvorrichtung mit zumindest einer Sitzschale (16a; 16b; 16c; 16d; 16e; 16f; 16g; 16h; 16i) und wenigstens einem Seitenaufprallmodul (22a; 22b; 22c; 22d; 22e; 22f; 22g; 22h; 22i), das an einer Seite der Sitzschale (16a; 16b; 16c; 16d; 16e; 16f; 16g; 16h; 16i) angeordnet ist und zumindest dazu vorgesehen ist, seitlich auf die Sitzschale (16a; 16b; 16c; 16d; 16e; 16f; 16g; 16h; 16i) einwirkende Aufprallenergie aufzunehmen, **dadurch gekennzeichnet, dass** das Seitenaufprallmodul (22a; 22b; 22c; 22d; 22e; 22f; 22g; 22h; 22i) wenigstens ein Absorptionselement (30a; 30b; 30c; 30d; 30e; 30f; 30g; 30h; 30i) aufweist, das wenigstens dazu vorgesehen ist, Aufprallenergie umzuwandeln, wobei das Seitenaufprallmodul (22a; 22b; 22c; 22d; 22e; 22f; 22g; 22h; 22i) wenigstens ein Seitenaufprallelement (26a; 26b; 26c; 26d; 26e; 26f; 26g; 26h; 26i) aufweist, das zwischen einer Ruhestellung und einer Funktionsstellung verstellbar ist, wobei das Absorptionselement (30a; 30b; 30c; 30d; 30e; 30f; 30g; 30h; 30i) zumindest in der Funktionsstellung funktional zwischen dem Seitenaufprallelement (26a; 26b; 26c; 26d; 26e; 26f; 26g; 26h; 26i) und der Sitzschale (16a; 16b; 16c; 16d; 16e; 16f; 16g; 16h; 16i) angeordnet ist.

2. Kindersitzschutzvorrichtung nach Anspruch 1, **dadurch gekennzeichnet, dass** das Absorptionselement (30a; 30d, 30f; 30g) dazu vorgesehen ist, die Aufprallenergie durch plastische Verformung aufzunehmen.

3. Kindersitzschutzvorrichtung nach Anspruch 1 oder 2, **dadurch gekennzeichnet, dass** das Absorptionselement (30a) als ein verformbares Blech ausgebildet ist.

4. Kindersitzschutzvorrichtung zumindest nach Anspruch 1, **dadurch gekennzeichnet, dass** das Absorptionselement (30a) einen im Wesentlichen U-förmigen Querschnitt aufweist.

5. Kindersitzschutzvorrichtung zumindest nach Anspruch 1, **dadurch gekennzeichnet, dass** das Absorptionselement (30a) eine vordefinierte Biegekante (38a) aufweist, an der das Absorptionselement (30a) in einem Normalbetriebszustand um wenigstens zwei Grad gebogen ist.

6. Kindersitzschutzvorrichtung nach Anspruch 5, **dadurch gekennzeichnet, dass** das Absorptionselement (30a) zwei Seitenwandungen (34a, 36a) aufweist, wobei in die Seitenwandungen (34a, 36a) in dem Bereich der vordefinierten Biegekante (38a) jeweils eine Nut (40a, 42a) eingebracht ist.

7. Kindersitzschutzvorrichtung zumindest nach Anspruch 1, **dadurch gekennzeichnet, dass** das Absorptionselement(30b; 30c) als ein Federelement ausgebildet ist.

8. Kindersitzschutzvorrichtung nach Anspruch 7, **dadurch gekennzeichnet, dass** das als Federelement ausgebildete Absorptionselement (30b) als eine Fluidfeder ausgebildet ist.

9. Kindersitzschutzvorrichtung nach Anspruch 7, **dadurch gekennzeichnet, dass** das als Federelement ausgebildete Absorptionselement (30c) als eine mechanische Feder ausgebildet ist.

10. Kindersitzschutzvorrichtung zumindest nach Anspruch 1, **dadurch gekennzeichnet, dass** das Absorptionselement (30d) als ein verformbares Rohr ausgebildet ist.

11. Kindersitzschutzvorrichtung zumindest nach Anspruch 1, **dadurch gekennzeichnet, dass** das Absorptionselement (30e) als eine Kniehebelmechanik ausgebildet ist.

12. Kindersitzschutzvorrichtung zumindest nach Anspruch 1, **dadurch gekennzeichnet, dass** das Absorptionselement (30f) als eine Wabenstruktur ausgebildet ist.

13. Kindersitzschutzvorrichtung zumindest nach Anspruch 1, **dadurch gekennzeichnet, dass** das Absorptionselement (30e) als ein Schaumelement ausgebildet ist.

14. Kindersitzschutzvorrichtung zumindest nach Anspruch 1, **dadurch gekennzeichnet, dass** das Absorptionselement (30f) zumindest eine aufzubiegende Nut (56f) aufweist.

15. Kindersitzschutzvorrichtung zumindest nach Anspruch 1, **dadurch gekennzeichnet, dass** das Absorptionselement (30i) durch Verdrängung eines Fluids dazu vorgesehen ist, eine Aufprallenergie abzubauen.

16. Kinderschutzvorrichtung nach Anspruch 1, **dadurch gekennzeichnet, dass** das Seitenaufprallelement (26a; 26b; 26c; 26d; 26e; 26f; 26g; 26h; 26i) als ein verschwenkbarer Flügel ausgebildet ist, der mit einem Ende schwenkbar gelagert ist.

17. Kinderschutzvorrichtung nach einem der vorhergehenden Ansprüche, **dadurch gekennzeichnet, dass** das Seitenaufprallmodul (22a; 22b; 22c; 22d; 22e; 22f; 22g; 22h; 22i) in einem Kopfbereich (20a) der Sitzschale (16a; 16b; 16c; 16d; 16e; 16f; 16g; 16h; 16i) angeordnet ist.

18. Kindersitz mit einer Kinderschutzvorrichtung nach einem der vorhergehenden Ansprüche, **gekennzeichnet durch** wenigstens zwei Seitenaufprallmodule (22a; 24a; 22b; 22c; 22d; 22e; 22f; 22g; 22h; 22i), die jeweils an gegenüberliegenden Seiten der Sitzschale (16a; 16b; 16c; 16d; 16e; 16f; 16g; 16h; 16i) angeordnet sind.

## Claims

1. Child seat protection device having at least one seat shell (16a; 16b; 16c; 16d; 16e; 16f; 16g; 16h; 16i) and at least one side impact module (22a; 22b; 22c; 22d; 22e; 22f; 22g; 22h; 22i), which is arranged on one side of the seat shell (16a; 16b; 16c; 16d; 16e; 16f; 16g; 16h; 16i) and is provided at least for absorbing impact energy acting laterally on the seat shell (16a; 16b; 16c; 16d; 16e; 16f; 16g; 16h; 16i)a, **characterised in that** the side impact module (22a; 22b; 22c; 22d; 22e; 22f; 22g; 22h; 22i) has at least one absorption element (30a; 30b; 30c; 30d; 30e; 30f; 30g; 30h; 30i), which is provided at least for converting impact energy, wherein the side impact module (22a; 22b; 22c; 22d; 22e; 22g; 22h; 22h; 22h; 22i) has at least one side impact element (26a; 26b; 26c; 26d; 26e; 26f; 26g; 26h; 26i), which can be adjusted between the rest position and the function position, whereby the absorption element (30a; 30b; 30c; 30d; 30e; 30f; 30g; 30h; 30i) is at least in the function position arranged in a functional way between the side impact element (26a; 26b; 26c; 26d; 26e; 26f; 26g; 26h; 26i) and the seat shell (16a; 16b; 16c; 16d; 16e; 16f; 16g; 16h; 16i);

2. Child seat protection device according to claim 1, **characterised in that** said absorption element (30a; 30d, 30f; 30g) is adapted to absorb said impact energy by plastic deformation.

3. Child seat protection device according to claim 1 or 2, **characterised in that** the absorption element (30a) is constructed as a deformable metal sheet.

4. Child seat protection device at least according to claim 1, **characterised in that** said absorption element (30a) has a substantially U-shaped cross section.

5. Child seat protection device at least according to claim 1, **characterised in that said** absorption element (30a) has a predefined bending edge (38a) whereby said absorption element (30a) is bent by at least two degrees in a normal operating state.

6. Child seat protection device according to Claim 5, **characterised in that** the absorption element (30a) has two side walls (34a, 36a), one groove (40a, 42a) in each case being made in the side walls (34a, 36a) in the region of the predefined bending edge (38a).

7. Child seat protection device at least according to claim 1, **characterised in that** the absorption element (30b; 30c) is constructed as a spring element.

8. Child seat protection device according to claim 7, **characterised in that** the absorption element (30b) constructed as a spring element is constructed as a fluid spring.

9. Child seat protection device according to claim 7, **characterised in that** the absorption element (30c) constructed as a spring element is constructed as a mechanical spring.

10. Child seat protection device at least according to claim 1, **characterised in that** the absorption element (30d) is constructed as a deformable tube.

11. Child seat protection device at least according to claim 1, **characterised in that** the absorption element (30e) is constructed as a toggle lever mechanism.

12. Child seat protection device at least according to claim 1, **characterised in that** the absorption element (30f) is constructed as a honeycomb structure.

13. Child seat protection device at least according to claim 1, **characterised in that** the absorption element (30e) is constructed as a foam element.

14. Child seat protection device at least according to claim 1, **characterised in that** said absorption element (30f) comprises at least one groove (56f) to be bent open.

15. Child seat protection device at least according to claim 1, **characterised in that** said absorption element (30i) is adapted to dissipate an impact energy by displacing a fluid.

16. Child protection device according to claim 1, **characterised in that** said side impact element (26a; 26b; 26c; 26d; 26e; 26f; 26g; 26h; 26i) is formed as a pivotable wing pivotally supported at one end.

17. Child protection device according to one of the preceding claims, **characterised in that** the side impact module (22a; 22b; 22c; 22d; 22e; 22f; 22g; 22h; 22i) is arranged in a head region (20a) of the seat shell (16a; 16b; 16c; 16d; 16e; 16f; 16g; 16h; 16i).

18. Child seat with a child protection device according to one of the preceding claims, **characterised by** at least two side impact modules (22a; 24a; 22b; 22c; 22d; 22e; 22f; 22g; 22h; 22i), which are arranged in each case on opposite sides of the seat shell (16a; 16b; 16c; 16d; 16e; 16f; 16g; 16h; 16i).

## Revendications

1. Dispositif de protection de siège pour enfant comprenant au moins une coque de siège (16a; 16b; 16c; 16d; 16e; 16f; 16g; 16h; 16i) et au moins un module d'impact latéral (22a; 22b; 22c; 22d; 22e; 22f; 22g; 22h; 22i) qui est disposé sur un côté de la coque de siège (16a; 16b; 16c; 16d; 16e; 16f; 16g; 16h; 16i) et qui est prévu au moins pour absorber l'énergie d'impact agissant latéralement sur la coque de siège (16a; 16b; 16c; 16d; 16e; 16f; 16g; 16h; 16i), **caractérisé en ce que** le module d'impact latéral (22a; 22b; 22c; 22d; 22e; 22f; 22g; 22h; 22i) comprend au moins un élément d'absorption (30a; 30b; 30c; 30d; 30e; 30f; 30g; 30h; 30i) qui est prévu au moins pour convertir l'énergie d'impact, dans lequel le module d'impact latéral (22a; 22b; 22c; 22d; 22e; 22f; 22g; 22h; 22i) comprend au moins un élément d'impact latéral (26a; 26b; 26c; 26d; 26e; 26f; 26g; 26h; 26i) qui est réglable entre une position de repos et une position fonctionnelle, dans lequel l'élément d'absorption (30a; 30b; 30c; 30d; 30e; 30f; 30g; 30h; 30i) est disposé au moins dans la position fonctionnelle fonctionnellement entre l'élément d'impact latéral (26a; 26b; 26c; 26d; 26e; 26f; 26g; 26h; 26i) et la coque de siège (16a; 16b; 16c; 16d; 16e; 16f; 16h; 16g; 16i).

2. Dispositif de protection pour siège d'enfant selon la revendication 1, **caractérisé en ce que** l'élément d'absorption (30a; 30d, 30f; 30g) est destiné à absorber l'énergie d'impact par déformation plastique.

3. Dispositif de sécurité pour siège d'enfant selon la revendication 1 ou 2, **caractérisé en ce que** l'élément d'absorption (30a) est réalisé sous la forme d'une tôle déformable.

4. Dispositif de protection pour siège d'enfant au moins selon la revendication 1, **caractérisé en ce que** l'élément d'absorption (30a) présente une section transversale sensiblement en forme de U.

5. Dispositif de sécurité pour siège d'enfant au moins selon la revendication 1, **caractérisé en ce que** l'élément d'absorption (30a) présente un bord de flexion (38a) prédéfini, sur lequel l'élément d'absorption (30a) est plié d'au moins deux degrés dans un état de fonctionnement normal.

6. Dispositif de sécurité pour siège d'enfant selon la revendication 5, **caractérisé en ce que** l'élément d'absorption (30a) présente deux parois latérales (34a, 36a), une rainure (40a, 42a) étant respectivement insérée dans les parois latérales (34a, 36a) dans la zone de l'arête de flexion prédéfinie (38a).

7. Dispositif de sécurité pour siège d'enfant au moins selon la revendication 1, **caractérisé en ce que** l'élément d'absorption (30b; 30c) est réalisé sous la forme d'un élément à ressort.

8. Dispositif de sécurité pour siège d'enfant selon la revendication 7, **caractérisé en ce que** l'élément d'absorption (30b) réalisé sous la forme d'un élément à ressort est réalisé sous la forme d'un ressort hydraulique.

9. Dispositif de sécurité pour siège d'enfant selon la revendication 7, **caractérisé en ce que** l'élément d'absorption (30c) réalisé sous la forme d'un élément à ressort est réalisé sous la forme d'un ressort mécanique.

10. Dispositif de sécurité pour siège d'enfant au moins selon la revendication 1, **caractérisé en ce que** l'élément d'absorption (30d) est réalisé sous la forme d'un tube déformable.

11. Dispositif de sécurité pour siège d'enfant au moins selon la revendication 1, **caractérisé en ce que** l'élément d'absorption (30e) est réalisé sous la forme d'un mécanisme à genouillère.

12. Dispositif de protection pour siège d'enfant au moins selon la revendication 1, **caractérisé en ce que** l'élément d'absorption (30f) est réalisé sous la forme d'une structure en nid d'abeilles.

13. Dispositif de sécurité pour siège d'enfant au moins selon la revendication 1, **caractérisé en ce que** l'élément d'absorption (30e) est réalisé sous la forme d'un élément en mousse.

14. Dispositif de sécurité pour siège d'enfant au moins selon la revendication 1, **caractérisé en ce que** l'élément d'absorption (30f) présente au moins une rainure (56f) à ouvrir par pliage.

15. Dispositif de protection de siège d'enfant au moins selon la revendication 1, **caractérisé en ce que** l'élément d'absorption (30i) est destiné à réduire une énergie d'impact par déplacement d'un fluide.

16. Dispositif de protection pour enfants selon la revendication 1, **caractérisé en ce que** l'élément d'impact latéral (26a; 26b; 26c; 26d; 26e; 26f; 26g; 26h; 26i) est réalisé sous la forme d'une aile pivotante qui est montée pivotante à une extrémité.

17. Dispositif de protection pour enfants selon l'une quelconque des revendications précédentes, **caractérisé en ce que** le module d'impact latéral (22a; 22b; 22c; 22d; 22e; 22f; 22g; 22h; 22i) est disposé dans une zone de tête (20a) de la coque de siège (16a; 16b; 16c; 16d; 16e; 16f; 16g; 16h; 16i).

18. Siège pour enfant avec un dispositif de protection pour enfant selon l'une des revendications précédentes, **caractérisé par** au moins deux modules d'impact latéral (22a; 24a; 22b; 22c; 22d; 22e; 22f; 22g; 22h; 22i) qui sont disposés respectivement sur des côtés opposés de la coque de siège (16a; 16b; 16c; 16d; 16e; 16f; 16g; 16h; 16i).
